(19) Europäisches Patentamt
European Patent Office
Office européen des brevets

(11) **EP 3 905 702 A1**

(12) **EUROPEAN PATENT APPLICATION**
published in accordance with Art. 153(4) EPC

(43) Date of publication:
**03.11.2021 Bulletin 2021/44**

(51) Int Cl.:
*H04N 21/236* (2011.01)    *H04N 21/4385* (2011.01)

(21) Application number: **19905776.1**

(86) International application number:
**PCT/JP2019/049713**

(22) Date of filing: **18.12.2019**

(87) International publication number:
**WO 2020/137766 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018 US 201862786022 P**

(71) Applicant: **Sony Group Corporation**
**108-0075 Tokyo (JP)**

(72) Inventor: **TSUKAGOSHI, Ikuo**
**Tokyo 108-0075 (JP)**

(74) Representative: **D Young & Co LLP**
**120 Holborn**
**London EC1N 2DY (GB)**

(54) **TRANSMISSION DEVICE, TRANSMISSION METHOD, ENCODING DEVICE, ENCODING METHOD, RECEIVING DEVICE, AND RECEIVING METHOD**

(57)    A material of image data subjected to a mixing process is enabled to be satisfactorily handled on a reception side, for example, when the material is transmitted.

A packet is transmitted, which includes, as payload data, divided image data obtained by dividing predetermined frame frequency image data into a predetermined number for each frame. The predetermined frame frequency image data is subjected to a mixing process selectively using preceding and/or subsequent frame image data for each frame. Metadata including information related to the mixing process is further transmitted in association with the image data of each frame. For example, the metadata is inserted into a payload header of a packet including at least a beginning of the image data of each frame and is transmitted. Moreover, for example, the metadata is transmitted by a metadata-only packet associated with the packet including the image data of each frame.

*FIG. 2*

**Description**

TECHNICAL FIELD

The present technology relates to a transmission apparatus, a transmission method, a coding apparatus, a coding method, a reception apparatus, and a reception method, and more particularly to a transmission apparatus and the like which handle image data subjected to a mixing process.

BACKGROUND ART

In a case where a receiver that performs decoding at a frame rate that has heretofore been broadcast receives a broadcast of a high frame rate, if a stream is partially decoded, then continuity of movement is impaired, and quality of a moving picture is degraded. A main cause of this degradation of such moving picture quality is said to be strobing caused by intermittent retinal projections of a human eye for fast movements due to coarse time continuity between partially decoded pictures.

In order to reduce the degradation of the moving picture quality due to the strobing, the present applicant has previously proposed a technology for performing pixel mixing for a picture in a frame period taken as a reference with pictures before and after the picture (refer to Patent Document 1). In this case, even if time subsample is performed in the conventional receiver, a moving element is reflected in a partially decoded time sample, so that the degradation of the moving picture quality due to the strobing is reduced.

CITATION LIST

PATENT DOCUMENT

Patent Document 1: International Publication No. 2015/076277

SUMMARY OF THE INVENTION

PROBLEMS TO BE SOLVED BY THE INVENTION

It is an object of the present technology to enable a material of image data subjected to a mixing process to be satisfactorily handled on a reception side, for example, when the material is transmitted.

SOLUTIONS TO PROBLEMS

The concept of the present technology is a transmission apparatus including:

a transmission unit that transmits a packet including, as payload data, divided image data obtained by dividing predetermined frame frequency image data into a predetermined number for each frame, in which
the predetermined frame frequency image data is subjected to a mixing process selectively using preceding and/or subsequent frame image data for each frame, and
the transmission unit further transmits metadata in association with the image data of each frame, the metadata including information related to the mixing process.

In the present technology, by the transmission unit, the packet is transmitted, which includes, as the payload data, the divided image data obtained by dividing the predetermined frame frequency image data into a predetermined number for each frame. Here, the predetermined frame frequency image data is subjected to the mixing process selectively using the preceding and/or subsequent frame image data for each frame. For example, the packet may conform to a format specified by a standard related to video signal transmission using an Internet Protocol (IP) network. In this case, for example, the standard may be set to SMPTE ST2022-6, or SMPTE ST2110-20. For example, the transmission apparatus may further include a mixing process unit that performs the mixing process.

By the transmission unit, the metadata including the information related to the mixing process is further transmitted in association with the image data of each frame. For example, the mixing process may include a predetermined number of stages of mixing process. Moreover, for example, the information related to the mixing process may include information indicating whether or not the image data of the corresponding frame is subjected to the mixing process, information of a camera shutter speed at a time of capture, information of a frame rate of a mixing process target picture, information of a frame rate after the mixing process, information indicating the mixing process target picture, and information indicating a ratio of filter calculation coefficients when mixed.

For example, the transmission unit may insert the metadata into a payload header of a packet including at least a beginning of the image data of each frame and transmits the packet. Moreover, for example, the transmission unit may transmit the metadata by a metadata-only packet associated with the packet including the image data of each frame.

As described above, in the present technology, together with the packet including, as the payload data, the divided image data obtained by dividing the predetermined frame frequency image data into a predetermined number for each frame, the metadata including the information related to the mixing process is transmitted in association with the image data of each frame. Therefore, it is made possible to satisfactorily handle the material of the image data, which is subjected to the mixing process, on the reception side, for example, when the material is transmitted.

Moreover, another concept of the present technology is a coding apparatus including:

a reception unit that receives a packet including, as payload data, divided image data obtained by dividing predetermined frame frequency image data into a predetermined number for each frame; in which the predetermined frame frequency image data is subjected to a mixing process selectively using preceding and/or subsequent frame image data for each frame, the reception unit further receives metadata including information related to the mixing process, the metadata being associated with the image data of each frame, the information related to the mixing process includes information indicating whether or not the image data of the corresponding frame is subjected to the mixing process, and the coding apparatus further includes an encoding unit that, on the basis of the information related to the mixing process, encodes, as image data of a base layer, the image data of the frame in the predetermined frame frequency image data, the image data being subjected to the mixing process, and encodes, as image data of an enhanced layer, image data of a frame in the predetermined frame frequency image data, the image data not being subjected to the mixing process.

In the present technology, by the reception unit, the packet is received, which includes, as the payload data, the divided image data obtained by dividing the predetermined frame frequency image data into a predetermined number for each frame. Here, the predetermined frame frequency image data is subjected to the mixing process selectively using the preceding and/or subsequent frame image data for each frame. Moreover, by the reception unit, further received is the metadata including the information related to the mixing process, the metadata being associated with the image data of each frame. Here, the information related to this mixing process includes the information indicating whether or not the image data of the corresponding frame is subjected to the mixing process.

By the encoding unit, on the basis of the information related to the mixing process, as the image data of the base layer, encoded is the image data in the frame, which is subjected to the mixing process, in the predetermined frame frequency image data, and as the image data of the enhanced layer, encoded is the image data in the frame, which is not subjected to the mixing process, in the predetermined frame frequency image data.

As described above, in the present technology, the predetermined frame frequency image data subjected to the mixing process is encoded on the basis of the information related to the mixing process (the information includes the information indicating whether or not the image data of the corresponding frame is subjected to the mixing process). Therefore, it is made possible to easily and appropriately encode, as the image data of the base layer, the image data in the frame, which is subjected to the mixing process, in the predetermined frame frequency image data, and to encode, as the image data of the enhanced layers, the image data in the frames, which are not subjected to the mixing process, in the predetermined frame frequency image data.

Moreover, another concept of the present technology is a reception apparatus including:

a reception unit that receives a packet including, as payload data, divided image data obtained by dividing predetermined frame frequency image data into a predetermined number for each frame, in which the predetermined frame frequency image data is subjected to a mixing process selectively using preceding and/or subsequent frame image data for each frame, the reception unit further receives metadata including information related to the mixing process, the metadata being associated with the image data of each frame, and the reception apparatus further includes a process unit that implements a reverse mixing process for the predetermined frame frequency image data on the basis of the information related to the mixing process and obtains image data for display.

In the present technology, by the reception unit, the packet is received, which includes, as the payload data, the divided image data obtained by dividing the predetermined frame frequency image data into a predetermined number for each frame. Here, the predetermined frame frequency image data is subjected to the mixing process selectively using the preceding and/or subsequent frame image data for each frame. Moreover, by the reception unit, further received is the metadata including the information related to the mixing process, the metadata being associated with the image data of each frame.

By the process unit, the reverse mixing process is implemented for the predetermined frame frequency image data on the basis of the information related to the mixing process, and the image data for display is obtained.

As described above, in the present technology, the reverse mixing process is implemented for the predetermined frame frequency image data subjected to the mixing process on the basis of the information related to the mixing process, and the image data for display is obtained. Therefore, it is made possible to easily and appropriately perform the reverse mixing process to obtain the image data for display.

BRIEF DESCRIPTION OF DRAWINGS

Fig. 1 is a diagram illustrating an example of a system configuration corresponding to a broadcast flow and steps of shooting/production and sending.
Fig. 2 is a diagram illustrating a configuration example of a transmission/reception system including a transmission side of shooting/production/sending and a reception side of reception/display.
Fig. 3 is a diagram illustrating another configuration example of the transmission side.
Fig. 4 is a diagram illustrating a configuration example of an edition apparatus that performs an inspection of a process.
Fig. 5 is a diagram for explaining layer distribution in hierarchical coding in an encoder.
Fig. 6 is a diagram for explaining the layer distribution in the hierarchical coding in the encoder.
Fig. 7 is a diagram for explaining a shutter rate at a time of shooting.
Fig. 8 is a diagram showing an example of a correspondence relationship between a shutter speed (1/sec), a transmission frame rate (fps), and a shutter angle (degree).
Fig. 9 is a diagram for explaining an example of a mixing process.
Fig. 10 is a diagram for explaining another example of the mixing process.
Fig. 11 is a diagram for explaining still another example of the mixing process.
Fig. 12 is a diagram illustrating an example of a packet.
Fig. 13 is a diagram illustrating a structure example of an RTP header.
Fig. 14 is a diagram showing contents of main information in the structure example of the RTP header.
Fig. 15 is a diagram illustrating a structure example of a payload header.
Fig. 16 is a diagram showing contents of main information in the structure of the payload header.
Fig. 17 is a diagram showing a structure example of "shutter_blending ()".
Fig. 18 is a diagram showing contents of main information in the structure example of "shutter_blending () ".
Fig. 19 is a diagram for explaining a specific example of metadata.
Fig. 20 is a diagram for explaining a specific example of the metadata.
Fig. 21 is a diagram for explaining a specific example of the metadata.
Fig. 22 is a diagram illustrating an example in which a picture is transmitted by a plurality of packets (media packets) in RTP transmission.
Fig. 23 is a diagram illustrating another example in which the picture is transmitted by a plurality of packets (media packets) in the RTP transmission.
Fig. 24 is a diagram illustrating a structure example of a payload header.
Fig. 25 is a diagram illustrating a structure example of a payload header and a payload in a metadata packet.

MODE FOR CARRYING OUT THE INVENTION

A description will be given below of a mode for carrying out the invention (hereinafter, the modes will be referred to as "embodiment"). Note that the description will be given in the following order.

1. Embodiment
2. Modified example

<1. Embodiment>

[Broadcast flow]

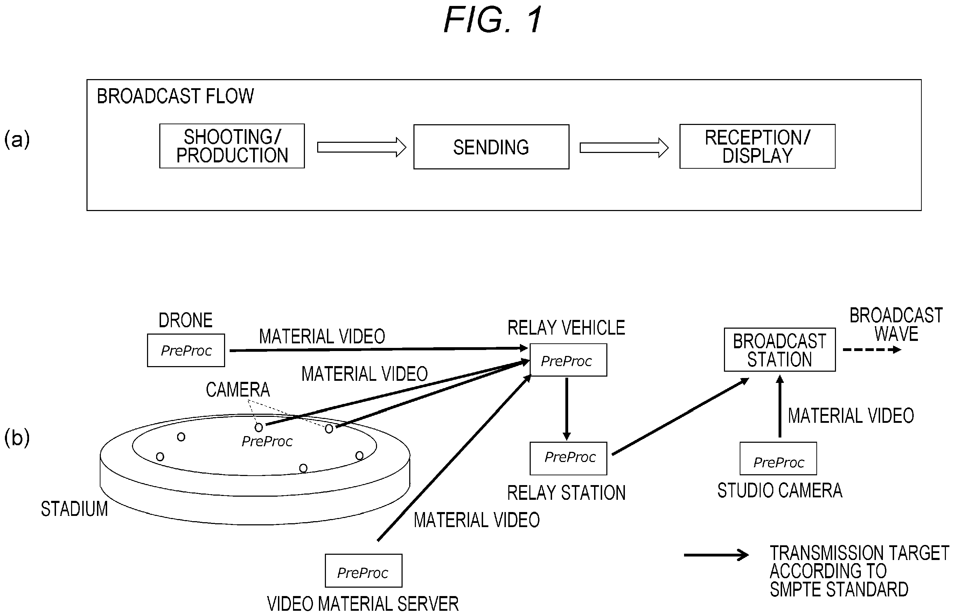

Fig. 1(a) illustrates a broadcast flow. The broadcast flow includes: a shooting/production step for obtaining image data of a material video; a sending step of sending the image data of the material video; and a reception/display step of receiving the image data of the material video and displaying an image.

Fig. 1(b) illustrates an example of a system configuration corresponding to the shooting/production and sending steps. For example, predetermined frame frequency image data of a material video captured by an image pickup apparatus (hereinafter, a camera) of a stadium is transmitted to a relay vehicle. Moreover, for example, predetermined frame frequency image data of a material video captured by a camera of a drone is transmitted to the relay vehicle. Furthermore, for example, a predetermined frequency image day is transmitted as a material video from a video material server to the relay vehicle.

Moreover, image data of an edited material video, which is obtained by the relay vehicle, is transmitted to a broadcasting center via a relay station. Furthermore, predetermined frame frequency image data of a material video captured by a camera of a studio is transmitted to the broadcasting center. Then, this predetermined frame frequency image data of the material video is encoded and transmitted on a broadcast wave from the broadcasting center.

The above-mentioned predetermined frame frequency image data of each of the material videos is taken as a transmission target according to the Society of Motion Picture and Television Engineers (SMPTE) standard. In this case, the predetermined frame frequency image data is divided into a predetermined number for each frame, and a packet including, as payload data, each divided image data obtained thereby is transmitted. This packet conforms to the format specified by a standard related to video signal transmission using an Internet Protocol (IP) network. The video signal in this case is, for example, a signal of a program material video.

In this embodiment, the predetermined frame frequency image data of the material video is subjected to a mixing process selectively using preceding and/or subsequent frame image data for each frame. This mixing process is performed in order to reduce degradation of moving picture quality due to strobing in a receiver that creates a display image from partial decoding.

This mixing process is performed by a mixing process unit, for example, a preprocessor (PreProc) provided in an imaging pickup apparatus that captures a material video, for example, the camera of the drone, the camera of the stadium, the camera of the studio, or the like. Alternatively, this mixing process is performed by a preprocessor provided in an apparatus that receives the material video captured by the image pickup apparatus, for example, the drone, the video material server, the relay vehicle, the relay station, or the like. This mixing process is performed not only in one step, but also in two steps, three steps, and so on in some cases. Note that all the camera of the drone (or drone), the camera of the stadium, and the cameras of the video material server, the relay vehicle, the relay station, and the studio do not have to include the preprocessor. However, it is assumed that at least the predetermined frame frequency image data of the material video sent from the broadcasting center is subjected to the mixing process.

In a case where the predetermined frame frequency image data subjected to the mixing process is transmitted to a next stage, metadata including information related to the mixing process is transmitted in association with the image data of each frame. The information related to this mixing process includes information indicating whether or not the image data of the corresponding frame is subjected to the mixing process, and the like.

[Transmission/reception system]

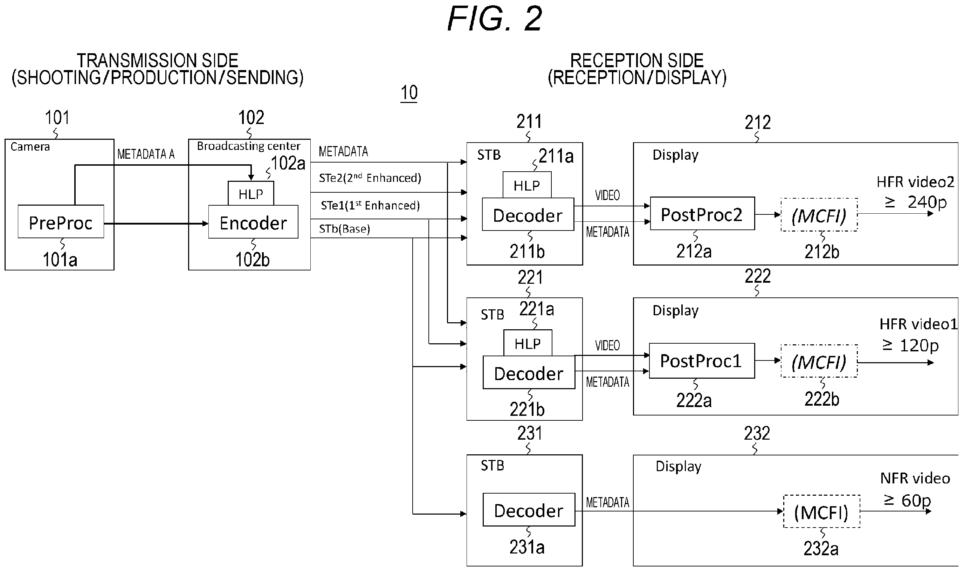

Fig. 2 illustrates a configuration example of a transmission/reception system 10 including a transmission side of shooting/production/sending and a reception side of reception/display. The transmission side includes a camera 101 and a broadcasting center 102. The camera 101 corresponds to the camera of the drone, the camera of the stadium, the camera of the studio, and the like in Fig. 1(b).

The camera 101 captures the predetermined frame frequency image data as the material video, and by a preprocessor 101a, performs the mixing process for the predetermined frame frequency image data, the mixing process selectively using the preceding and/or subsequent frame image data for each frame. In this case, in the preprocessor 101a, a process of down-conversion for the frame frequency is also performed according to needs.

A transmission unit (not shown) of the camera 101 transmits, to the broadcasting center 102, a packet including divided image data as the payload data, the divided image data being obtained by dividing the predetermined frame frequency image data subjected to the above-mentioned mixing process into a predetermined number for each frame. Moreover, the transmission unit (not shown) of the camera 101 transmits metadata A, which includes information related to the mixing process, to the broadcasting center 102 in association with the image data of each frame.

The broadcasting center 102 receives the packet, which is transmitted from the camera 101, by a reception unit (not shown), and acquires the predetermined frame frequency image data as the material video subjected to the mixing process. Moreover, this reception unit receives the metadata A transmitted from the camera 101.

By a high level parser (HLP) unit 102a, the broadcasting center 102 interprets the metadata A, which is associated with the image data of each frame, and by an encoder 102b, on the basis of this interpretation, performs a hierarchical coding process by, for example, high efficiency video coding (HEVC) for the predetermined frame frequency image data as the material video subjected to the mixing process, and obtains a basic stream STb, a first extension stream STe1, and a second extension stream STe2.

In this case, the encoder 102b encodes, as image data of the base layer, for example, the image data in the frame, which is subjected to the mixing process, in the predetermined frame frequency image data, and encodes, as image data of enhanced layers, image data of frames, which are not subjected to the mixing process, in the predetermined frame frequency image data.

The broadcasting center 102 transmits the basic stream STb, the first extension stream STe1, and the second extension stream STe2 by a transmission unit (not shown). In this case, the broadcasting center 102 also transmits metadata, which includes the information related to the mixing process, in association with the image data of each stream. For example, such transmission is performed by inserting a newly defined SEI message, which includes the metadata, in a portion of "SEIs" of an access unit (AU) of each picture (frame).

Note that, in the illustrated example, illustrated is such an example of transmitting two extension streams, which are the first extension stream STe1 and the second extension stream STe2, in addition to the basic stream STb. However, it is also conceivable that the number of extension streams is one, or three or more.

The reception side includes, for example, a set top box 211 and a display 212. By a reception unit (not shown), the set top box 211 receives the basic stream STb, the first extension stream STe1 and the second extension stream STe2, and metadata including information related to the mixing process associated with the image data of each stream.

By an HLP unit 211a, the set top box 211 interprets the metadata sent in association with the image data of each frame. Moreover, by a decoder, 211b, the set top box 211 performs a decoding process for the basic stream STb, the first extension stream STe1, and the second extension stream STe2, and obtains, for example, 240 Hz image data.

By a transmission unit (not shown), the set top box 211 transmits the 240 Hz image data and the metadata corresponding to each frame to the display 212 using, for example, a digital interface such as High-Definition Multimedia Interface (HDMI).

By a reception unit (not shown), the display 212 receives the 240-Hz image data and the metadata corresponding to each frame, both of which are sent from the set top box 211. By a postprocessor 212a, on the basis of the metadata, the display 212 implements a reverse mixing process for the image data of the base layer, which is subjected to the mixing process, in the 240 Hz image data, and obtains the image data that is not mixed yet.

Moreover, the display 212 directly uses the 240 Hz image data, which is obtained by the postprocessor 212a, as image data for display, or alternatively, enhances a frame rate thereof by implementing a frame interpolation process by a motion compensated frame insertion (MCFI) unit 212b, and uses the 240 Hz image data with the increased frame rate as the image data for display.

Moreover, the reception side includes, for example, a set top box 221 and a display 222. By a reception unit (not shown), the set top box 221 receives the basic stream STb and the first extension stream STe1, and the metadata including the information related to the mixing process associated with the image data of each stream.

By an HLP unit 221a, the set top box 221 interprets the metadata sent in association with the image data of each frame. Moreover, by a decoder, 221b, the set top box 221 performs a decoding process for the basic stream STb and the first extension stream STe1, and obtains, for example, 120 Hz image data.

By a transmission unit (not shown), the set top box 221 transmits the 120 Hz image data and the metadata corresponding to each frame to the display 222 using, for example, a digital interface such as HDMI.

By a reception unit (not shown), the display 222 receives the 120-Hz image data and the metadata corresponding to each frame, both of which are sent from the set top box 221. By a postprocessor 222a, on the basis of the metadata, the display 222 implements a reverse mixing process for the image data of the base layer, which is subjected to the mixing process, in the 120 Hz image data, and obtains the image data that is not mixed yet.

Moreover, the display 201B directly uses the 120 Hz image data, which is obtained by the postprocessor 222a, as such image data for display, or alternatively, enhances a frame rate thereof by implementing a frame interpolation process by a MCFI unit 222b, and uses the 120 Hz image data with the increased frame rate as the image data for display.

Moreover, the reception side includes, for example, a set top box 231 and a display 232. The set top box 231 receives the basic stream STb by a reception unit (not shown). By a decoder 231a, the set top box 231 performs a decoding process for the basic stream STb, and obtains, for example, 60 Hz image data. By a transmission unit (not shown), the set top box 231 transmits the 60 Hz image data to the display 232 using, for example, a digital interface such as HDMI.

By a reception unit (not shown), the display 232 receives the 60-Hz image data sent from the set top box 231. The display 232 directly uses the received 60 Hz image data as such image data for display, or alternatively, enhances a frame rate thereof by implementing a frame interpolation process by a MCFI unit 232a, and uses the 60 Hz image data with the increased frame rate as the image data for display.

Note that, in the illustrated example, three systems are shown as the reception side, but the present technology is not limited to this. For example, the number of systems may vary depending on the number of extension streams.

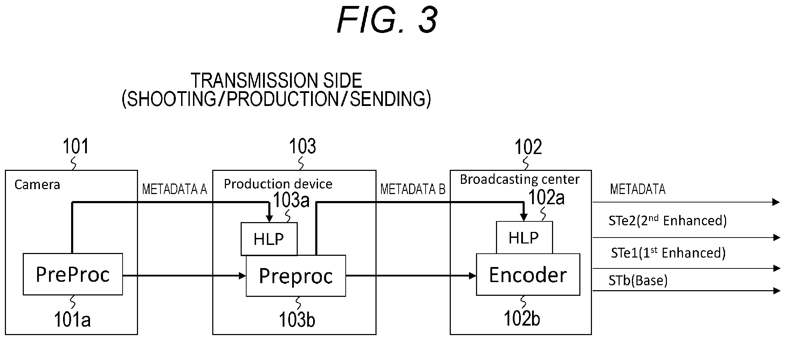

Fig. 3 illustrates another configuration example of the transmission side. In Fig. 3, portions corresponding to those in Fig. 2 are added with and denoted by the same reference numerals. This transmission side includes the camera 101, an edition apparatus (production device) 103, and the broadcasting center 102. The camera 101 corresponds, for example, to the camera of the drone, the camera of the stadium, or the like in Fig. 1(b). The edition apparatus 103 corresponds to, for example, the relay vehicle, the relay station or the like in Fig. 1(b).

The camera 101 captures the predetermined frame frequency image data as the material video, and by the preprocessor 101a, performs the mixing process for the predetermined frame frequency image data, the mixing process selectively using the preceding and/or subsequent frame image data for each frame. In this case, in the preprocessor 101a, the process of down-conversion for the frame frequency is also performed according to needs.

The transmission unit (not shown) of the camera 101 transmits, to the edition apparatus 103, the packet including the divided image data as the payload data, the divided image data being obtained by dividing the predetermined frame frequency image data subjected to the above-mentioned mixing process into a predetermined number for each frame. Moreover, the transmission unit (not shown) of the camera 101 transmits the metadata A, which includes the information related to the mixing process, to the edition apparatus 103 in association with the image data of each frame.

The edition apparatus 103 receives the packet, which is transmitted from the camera 101, by the reception unit (not shown), and acquires the predetermined frame frequency image data as the material video subjected to the mixing process. Moreover, this reception unit receives the metadata A transmitted from the camera 101.

By an HLP unit 103a, the edition apparatus 103 interprets the metadata A, which is associated with the image data of each frame, and by a preprocessor 103b, on the basis of this interpretation, performs the mixing process for the predetermined frame frequency image data, the mixing process selectively using the preceding and/or subsequent frame image data for each frame, and obtains predetermined frame frequency image data subjected to a multi-stage, here, two-stage mixing process. In this case, in the preprocessor 103b, the process of down-conversion for the frame frequency is also performed according to needs.

A transmission unit (not shown) of the edition apparatus 103 transmits, to the broadcasting center 102, such a packet including divided image data as the payload data, the divided image data being obtained by dividing the predetermined frame frequency image data subjected to the above-mentioned mixing process into a predetermined number for each frame. Moreover, the transmission unit (not shown) of the edition apparatus 103 transmits metadata B, which includes information related to the multi-stage mixing process, to the broadcasting center 102 in association with the image data of each frame.

The broadcasting center 102 receives the packet, which is transmitted from the edition apparatus 103, by the reception unit (not shown), and acquires the predetermined frame frequency image data as the material video subjected to the mixing process. Moreover, this reception unit receives the metadata B transmitted from the edition apparatus 103.

By the HLP unit 102a, the broadcasting center 102 interprets the metadata B, which is associated with the image data of each frame, and by the encoder 102b, on the basis of this interpretation, performs the hierarchical coding process by, for example, the HEVC for the predetermined frame frequency image data as the material video subjected to the mixing process, and obtains the basic stream STb, the first extension stream STe1, and the second extension stream STe2.

In this case, the encoder 102b encodes, as the image data of the base layer, the image data in the frame, which is subjected to the mixing process, in the predetermined frame frequency image data, and encodes, as the image data of the enhanced layers, the image data in the frames, which are not subjected to the mixing process, in the predetermined frame frequency image data.

The broadcasting center 102 transmits the basic stream STb, the first extension stream STe1, and the second extension stream STe2 by the transmission unit (not shown). In this case, the broadcasting center 102 also transmits the metadata, which includes the information related to the mixing process, in association with the image data of each stream. For example, such transmission is performed by inserting the newly defined SEI message, which includes the metadata, in the portion of "SEIs" of the access unit (AU) of each picture (frame).

Note that, in the illustrated example, illustrated is such an example of transmitting two extension streams, which are the first extension stream STe1 and the second extension stream STe2, in addition to the basic stream STb. However, it is also conceivable that the number of extension streams is one, or three or more.

"Inspection of process"

Although not mentioned above, it is also conceivable that, by looking at image quality of the image data already subjected to the mixing process by the preprocessor 103b, by the edition apparatus 103, a user determines whether or not to perform the mixing process by the preprocessor 103b for the image data sent from the preceding stage, here, the camera 101.

At that time, there is also a case where such a determination is made on the basis of image quality of a displayed image based on image data obtained by performing the reverse mixing process by the postprocessor after passage through encoder/decoder as in the actual broadcasting. Moreover, at that time, there is also a case where the determination is made on the basis of image quality of a displayed image based on image data left subjected to the mixing process after the passage through the encoder/decoder as in the actual broadcasting. Furthermore, at that time, there is also a case where the determination is made on the basis of image quality of a displayed image based on image data subjected to an uncompressed mixing process without the passage through the encoder/decoder.

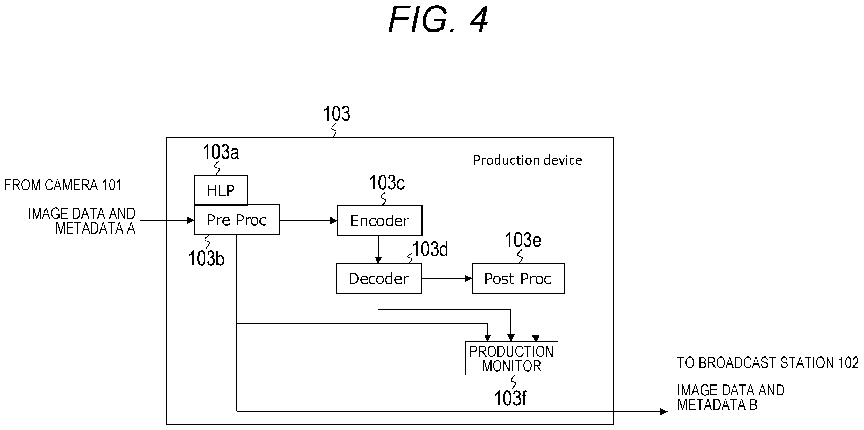

Fig. 4 illustrates a configuration example of the edition apparatus 103 in that case. The edition apparatus 103 includes an encoder 103c, a decoder 103d, a postprocessor 103e, and a production monitor 103f, in addition to the HLP unit 103a and the preprocessor 103b.

The predetermined frequency image data obtained by the mixing process by the preprocessor 103b is sent as the first image data to the production monitor 103f. Moreover, the predetermined frequency image data obtained by the mixing process by the preprocessor 103 is sent as second image data to the production monitor 103f after being encoded by the encoder 103c and decoded by the decoder 103d.

Furthermore, the predetermined frame frequency image data obtained from the decoder 103d is sent as third image data to the production monitor 103f after being subjected to the reverse mixing process by the postprocessor 103e. Although not shown, this reverse mixing process in the postprocessor 103e is performed on the basis of the metadata B output from the preprocessor 103b.

In this configuration example, it is made possible for the user to selectively switch the first image data, the second image data, or the third image data on the production monitor 103f, to look at the displayed image by each thereof, and to determine whether or not to perform the mixing process by the preprocessor 103b. Note that, in a case where the mixing process is not performed by the preprocessor 103b, the image data and the metadata B, which are sent from the edition apparatus 103 to the subsequent stage, here the broadcasting center 102 become the same as the image data and the metadata A, which are sent from the camera 101 to the edition apparatus 103.

"Layer distribution in hierarchical coding in encoder"

As mentioned above, the encoder 102b encodes, as the image data of the base layer, for example, the image data in the frame, which is subjected to the mixing process, in the predetermined frame frequency image data, and encodes, as image data of the enhanced layers, image data of frames, which are not subjected to the mixing process, in the predetermined frame frequency image data.

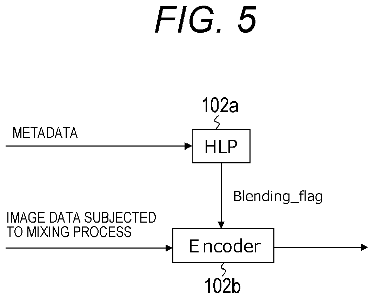

The metadata including the information related to the mixing process, which is associated with the image data of each frame sent together with the predetermined frame frequency image data subjected to the mixing process by the encoder 102b, includes "Blending_flag" as information indicating whether or not the image data of the corresponding frame is subjected to the mixing process. As illustrated in Fig. 5, a layer distribution process in the encoder 102b is performed on the basis of "Blending_flag".

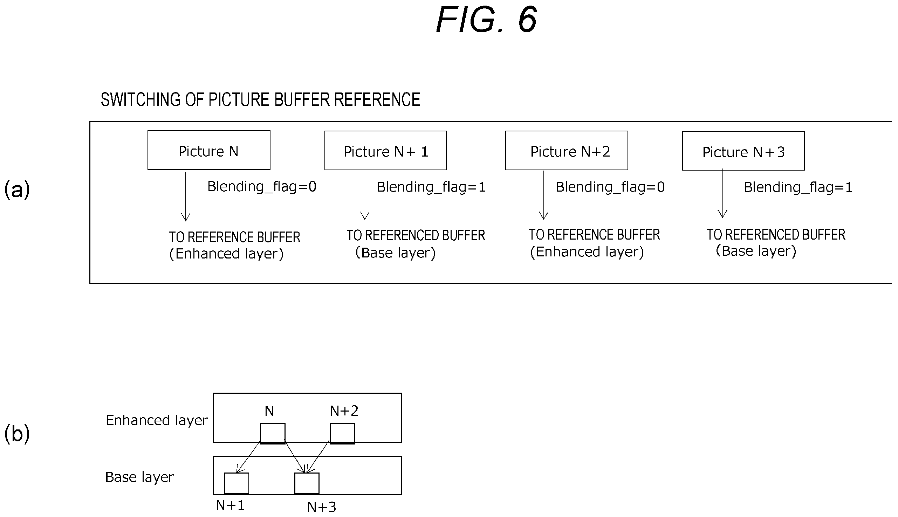

In this case, as illustrated in Fig. 6(a), the encoder 102b switches accumulation into reference/non-reference buffers of encoder 102b according to "Blending_flag" of the picture (frame) to be input. In the case of "Blending_flag = 1", the accumulation is performed into the non-reference buffer by the coding of the picture, and in the case of "Blending_flag = 0", the accumulation is performed into the reference buffer by the coding the picture.

As illustrated in Fig. 6(b), it is possible for the picture in the base layer of the referenced buffer to be referred to from the picture in the enhanced layer of the reference buffer, and the picture in the enhanced layer of the reference buffer is not referred to from other pictures.

"Shutter rate at time of shooting"

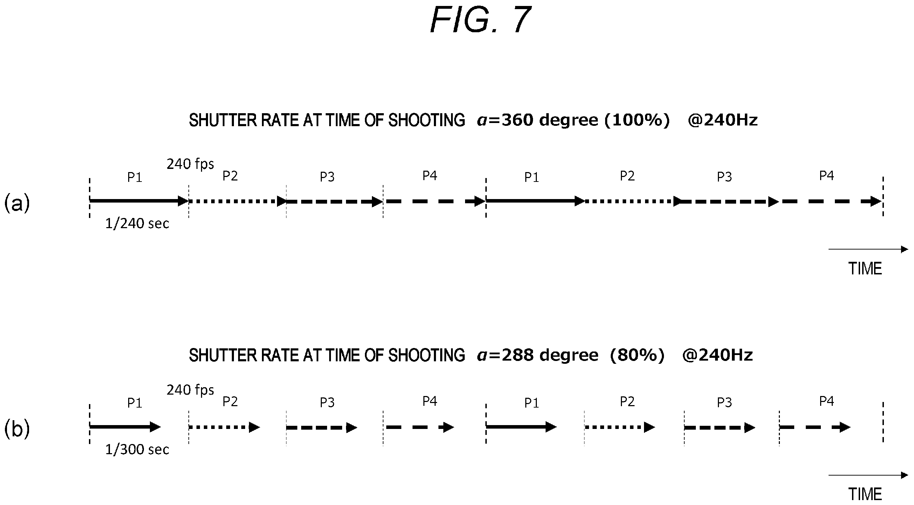

A shutter rate at the time of shooting will be described. Fig. 7(a) shows image data taken in the case of shooting at a shutter speed of 1/240 sec in the frame frequency of 240 Hz (240 fps). This image data has a structure in which four frame sections of P1, P2, P3, and P4 are repeated.

In this case, since a shutter is open for the entire period with respect to a frame interval of 240 Hz, a shutter angle (shutter rate) $\alpha$ becomes 360 degrees (100%) as expressed by the following Equation (1).

$$\alpha = 360*240/240 = 360 \quad ... \quad (1)$$

Fig. 7(b) shows image data taken in the case of shooting at a shutter speed of 1/300 sec in the frame frequency of 240 Hz (240 fps). This image data has a structure in which four frame sections of P1, P2, P3, and P4 are repeated.

In this case, since a shutter open period becomes as short as 1/300 sec with respect to the frame interval of 240 Hz, the shutter angle (shutter rate) $\alpha$ becomes 288 degrees (80%) as expressed by the following Equation (2).

$$\alpha = 360*240/300 = 288 \quad ... \quad (2)$$

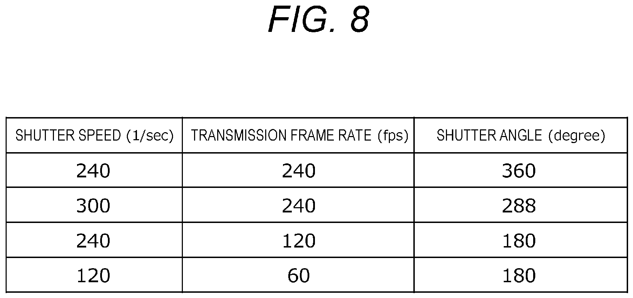

Fig. 8 shows an example of a correspondence relationship between the shutter speed (1/sec), a transmission frame rate (fps), and the shutter angle (degree). Generally, the shutter angle (degree) is calculated by the following Equation (3).

$$\text{Shutter angle (degree)} = 360 * (\text{transmission frame rate}) * (\text{shutter speed}) \quad \ldots (3)$$

"Mixing process"

As mentioned above, the mixing process is performed in order to reduce the degradation of the moving picture quality due to the strobing in the receiver that creates the display image from the partial decoding. The image data that is not subjected to the mixing process is image data in an incompatible mode, and the image data subjected to the mixing process is image data in a low frame rate compatible mode.

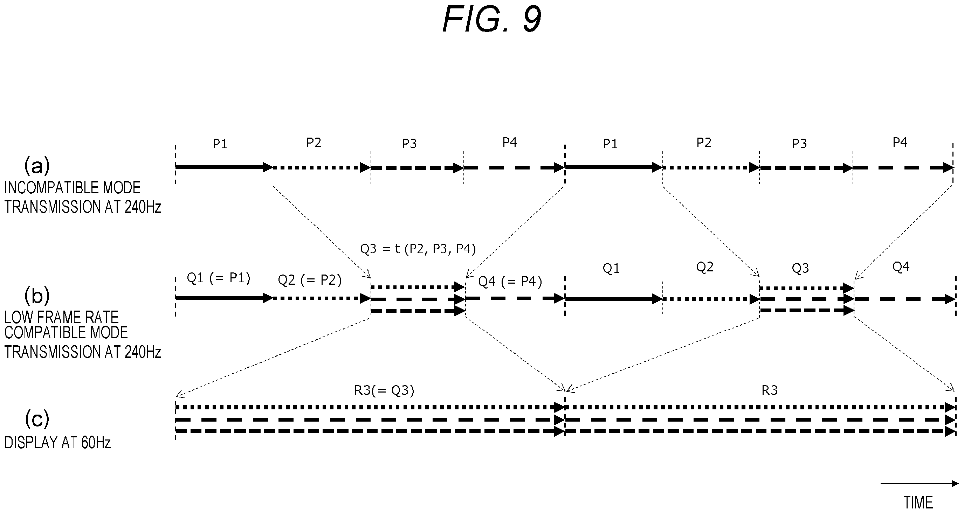

An example of the mixing process will be described with reference to Fig. 9. Fig. 9(a) shows the image data in the incompatible mode, which is a basic form and is not subjected to the mixing process. This image data is image data shot at a frame frequency of 240 Hz (240 fps) and a shutter speed of 1/240 sec. This image data has a structure in which four frame (picture) sections of P1, P2, P3, and P4 are repeated. The shutter angle (shutter rate) $\alpha$ of each frame in this case is 360 degrees (100%) (see Fig. 7(a)).

Fig. 9(b) shows 240 Hz image data in the low frame rate compatible mode, which is subjected to the mixing process. This image data has a structure in which four frame sections of Q1, Q2, Q3, and Q4 are repeated. Image data in the frames of Q1, Q2, and Q4 are the same as the image data in the frames of P1, P2, and P4, respectively. A shutter angle (shutter rate) $\alpha$ of the frames of Q1, Q2, and Q4 is 360 degrees (100%).

The image data in the frame of Q3 is mixed image data t(P2, P3, P4) obtained by performing filter calculation for the image data in the frames of P2, P3, and P4. In this case, the image data in the frame of Q3 has pixel elements of the three frames of P2, P3, and P4 mixed with one another by the filter calculation. A shutter angle (shutter rate) $\beta$ of this frame of Q3 becomes 360 * 3 degrees (300%) since pixel elements of 3 frames are reflected in 1 frame of 240 Hz as expressed by the following Equation (4).

$$\beta = 360*240/240*3 = 360*3 \quad \ldots (4)$$

Fig. 9(c) shows image data in the case of extracting the image data in the frame of Q3, which is subjected to the mixing process, and displaying the image data at 60 Hz on the reception side. Image data in a frame of R3 is the one in which the image data in the frame of Q3 is displayed at a time interval of 60 Hz.

The image data in this frame of R3 has synthesized pixel elements in a frame corresponding to three slots of P2, P3, and P4 in the original 240-Hz four slots in a time width of 60 Hz. Therefore, a shutter angle (shutter rate) $\gamma$ in the frame of R3 is 270 degrees (75%) as expressed by the following Equation (5).

$$\gamma = 360*60/240*3 = 270 \quad \ldots (5)$$

In the case of transmitting, to the reception side, the image data in the low frame rate compatible mode, which is shown in Fig. 9(b) and subjected to the mixing process, encoding is performed, for example, as follows in the encoder 102b. That is, the basic stream STb includes encoded image data of 60 Hz layer image data (see image data in the frame (picture) of Q3). Moreover, the first extension stream STe1 includes encoded image data of 120 Hz layer image data (see image data in the frame (picture) of Q1). Furthermore, the second extension stream Ste2 includes encoded image data of 240 Hz layer image data (see image data in the frames (pictures) of Q2 and Q4).

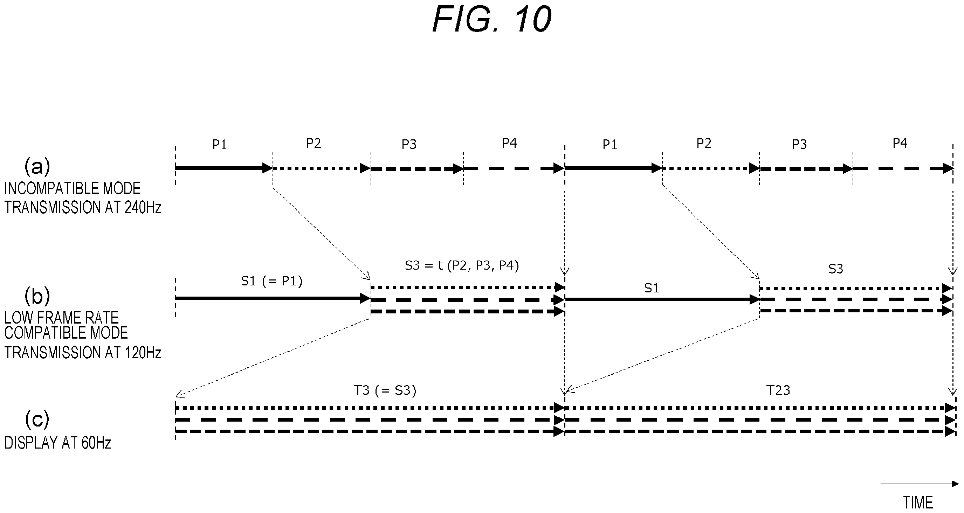

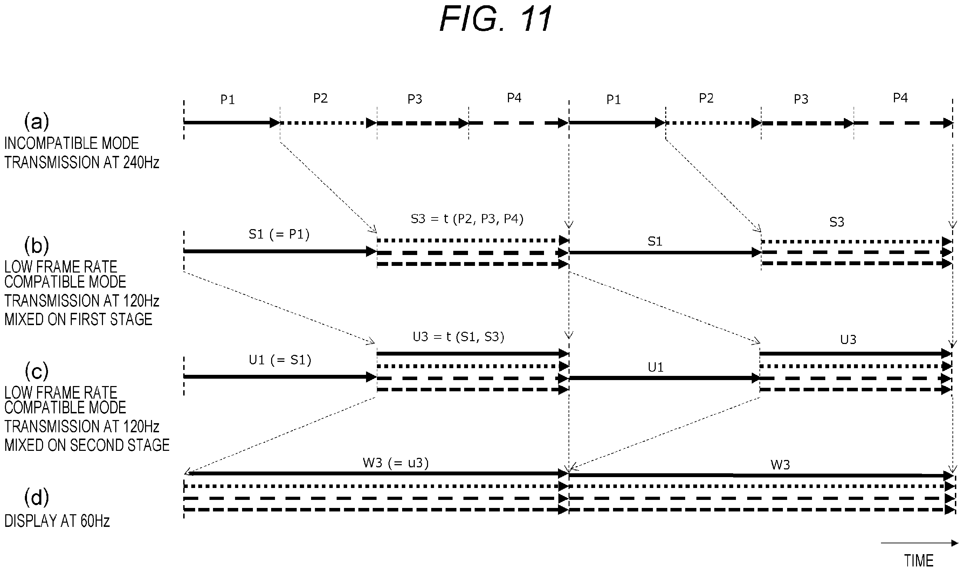

Note that, in the example of Fig. 9, an example in which the shutter angle (shutter rate) $\alpha$ at the time of shooting is 360 degrees (100%) is shown; however, even in the case of other examples, a similar consideration can be made. For example, in the case of $\alpha$ = 288 degrees, $\beta$ = 288 * 3 = 864 degrees and $\gamma$ = 288 * 3/4 = 216 degrees are established. This applies similarly not only to the case of the example of Fig. 9 but also to examples of Figs. 10 and 11 below.

Another example of the mixing process will be described with reference to Fig. 10. Fig. 10(a) shows the image data in the incompatible mode, which is a basic form and is not subjected to the mixing process. This image data is image data shot at a frame frequency of 240 Hz (240 fps) and a shutter speed of 1/240 sec. This image data has a structure in which four frame (picture) sections of P1, P2, P3, and P4 are repeated. The shutter angle (shutter rate) $\alpha$ of each frame in this case is 360 degrees (100%) (see Fig. 7(a)).

Fig. 10(b) shows 120 Hz image data in the low frame rate compatible mode, which is subjected to the mixing process. This image data has a structure in which two frame sections of S1 and S3 are repeated. Image data in the frame of S1 is the same as the image data in the frame of P1. This frame of S1 has a time width of 120 Hz, which corresponds to a time width of two slots of 240 Hz.

If the image data in this frame of S1 includes pixel elements of two slots of P1 and P2, the shutter angle (shutter rate) is 360 degrees (100%). However, since the image data in this frame of S1 includes only the pixel elements of the slot of P1, the shutter angle (shutter rate) of the frame of S1 is 180 degrees (50%).

The image data in the frame of S3 is mixed image data t(P2, P3, P4) obtained by performing the filter calculation for the image data in the frames of P2, P3, and P4. This frame of S3 has a time width of 120 Hz, which corresponds to a time width of two slots of 240 Hz. If the image data in this frame of S3 includes pixel elements of two slots of P3 and P4, the shutter angle (shutter rate) is 360 degrees (100%).

However, the image data in the frame of S3 also includes pixel elements of three slots obtained by adding the slot of P2 to the two slots of P3 and P4. Therefore, a shutter angle (shutter rate) $\beta$ in the frame of S3 is 540 degrees (150%) as expressed by the following Equation (6).

$$\beta = 360*120/240*3 = 540 \quad \ldots \quad (6)$$

Fig. 10(c) shows image data in the case of extracting the image data in the frame of S3, which is subjected to the mixing process, and displaying the image data at 60 Hz on the reception side. Image data in a frame of T3 is the one in which the image data in the frame of S3 is displayed at a time interval of 60 Hz.

The image data in this frame of T3 has synthesized pixel elements in a frame corresponding to three slots of P2, P3, and P4 in the original 240-Hz four slots in a time width of 60 Hz. Therefore, a shutter angle (shutter rate) $\gamma$ in the frame of T3 is 270 degrees (75%) as expressed by the following Equation (7).

$$\gamma = 360*60/240*3 = 270 \quad \ldots \quad (7)$$

In the case of transmitting, to the reception side, the image data in the low frame rate compatible mode, which is shown in Fig. 10(b) and subjected to the mixing process, encoding is performed, for example, as follows in the encoder 102b. That is, the basic stream STb includes encoded image data of 60 Hz layer image data (see image data in the frame (picture) of S3). Moreover, the first extension stream STe1 includes encoded image data of 120 Hz layer image data (see image data in the frame (picture) of S1). In this case, the second extension stream Ste2 is not generated.

Still another example of the mixing process will be described with reference to Fig. 11. Fig. 11(a) shows the image data in the incompatible mode, which is a basic form and is not subjected to the mixing process. This image data is image data shot at a frame frequency of 240 Hz (240 fps) and a shutter speed of 1/240 sec. This image data has a structure in which four frame (picture) sections of P1, P2, P3, and P4 are repeated. The shutter angle (shutter rate) $\alpha$ of each frame in this case is 360 degrees (100%) (see Fig. 7(a)).

Fig. 11(b) shows 120 Hz image data in the low frame rate compatible mode, which is subjected to a first stage mixing process. Although a detailed description will be omitted, this image data is the same as the image data shown in Fig. 10(b) mentioned above.

Fig. 11(c) shows 120 Hz image data in the low frame rate compatible mode, which is subjected to a second stage mixing process. This image data has a structure in which two frame sections of U1 and U3 are repeated. Image data in the frame of U1 is the same as the image data in the frame of S1.

The image data in the frame of U3 is mixed image data t(S1, S3) obtained by performing the filter calculation for the image data in the frames of S1 and S3. This frame of U3 has a time width of 120 Hz, which corresponds to a time width of two slots of 240 Hz. If the image data in this frame of U3 includes pixel elements of two slots of P3 and P4, the shutter angle (shutter rate) is 360 degrees (100%).

However, the image data in the frame of U3 also includes pixel elements of four slots obtained by adding the slots of P1 and P2 to the two slots of P3 and P4. Therefore, a shutter angle (shutter rate) $\beta$ in the frame of U3 is 360*2 degrees (200%) as expressed by the following Equation (8).

$$\beta = 360*120/240*4 = 360*2 \quad \ldots \quad (8)$$

Fig. 11(d) shows image data in the case of extracting the image data in the frame of U3, which is subjected to the mixing process, and displaying the image data at 60 Hz on the reception side. Image data in a frame of W3 is the one in which the image data in the frame of U3 is displayed at a time interval of 60 Hz.

The image data in this frame of W3 has synthesized pixel elements in a frame in all the original 240-Hz four slots in a time width of 60 Hz. Therefore, a shutter angle (shutter rate) $\gamma$ in the frame of W3 is 360 degrees (100%) as expressed by the following Equation (9).

$$\gamma = 360*60/240*4 = 360 \quad ... \quad (9)$$

In the case of transmitting the image data in the low frame rate compatible mode, which is shown in Fig. 11(c) and subjected to the mixing process, to the reception side, encoding is performed, for example, as follows in the encoder 102b. That is, the basic stream STb includes encoded image data of 60 Hz layer image data (see image data in the frame (picture) of U3). Moreover, the first extension stream STe1 includes encoded image data of 120 Hz layer image data (see image data in the frame (picture) of U1). In this case, the second extension stream Ste2 is not generated.

"Transmission of metadata"

As mentioned above, on the transmission side (shooting/production/sending) of Fig. 2, when the predetermined frame frequency image data subjected to the mixing process is packetized and transmitted to the next stage, metadata including information related to the mixing process is also transmitted in association with the image data of each frame.
Here, as mentioned above, for example, the transmission of the metadata is performed by inserting the metadata into a payload header of the packet including at least the beginning of the image data of each frame and transmitting the metadata (first method), or by transmitting the metadata by a metadata-only packet associated with the packet including the image data of each frame (second method). Note that a method of transmitting the metadata is not limited to the first method and the second method. Details of the first method and the second method will be described below.

"First method"

This first method is the one of inserting the metadata into the payload header of the packet including at least the beginning of the image data of each frame and transmitting the metadata.

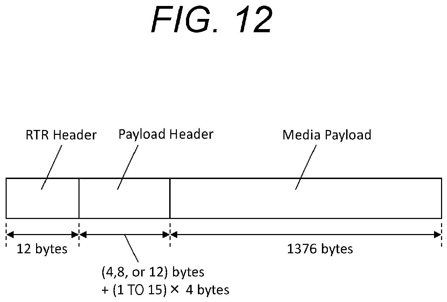

Fig. 12 illustrates an example of the packet. This example is standardized as "ST 2022-6 Transport of High Bit Rate Media Signals over IP Networks (HBRMT)". This standard is a standard for IP transmission of SDI signals, in which Society of Motion Picture and Television Engineers (SMPTE) defines IP packets. In the case of this standard, a video and an audio are mixed and inserted into the payload.
In this standard, an SDI stream (picture data) is divided into every 1376 bytes to be defined as a media payload, and is then added with a payload header, and thereafter, a 12-byte RTP header is further added thereto, and all are encapsulated in an RTP packet. The "SMPTEST 2022-6" standard specifies IP transmission up to 3G-SDI uncompressed streams which carry a 1080P video. Note that, in reality, a UDP header is added to the RTP packet, an IP packet is further added thereto, and the RTP packet is transmitted as an IP packet.

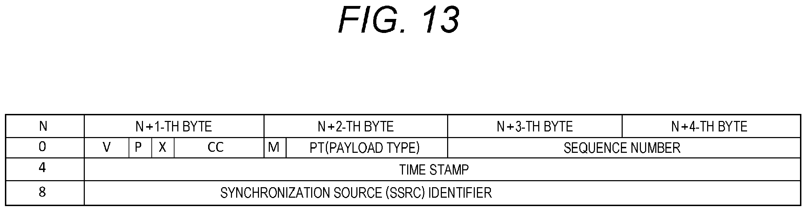

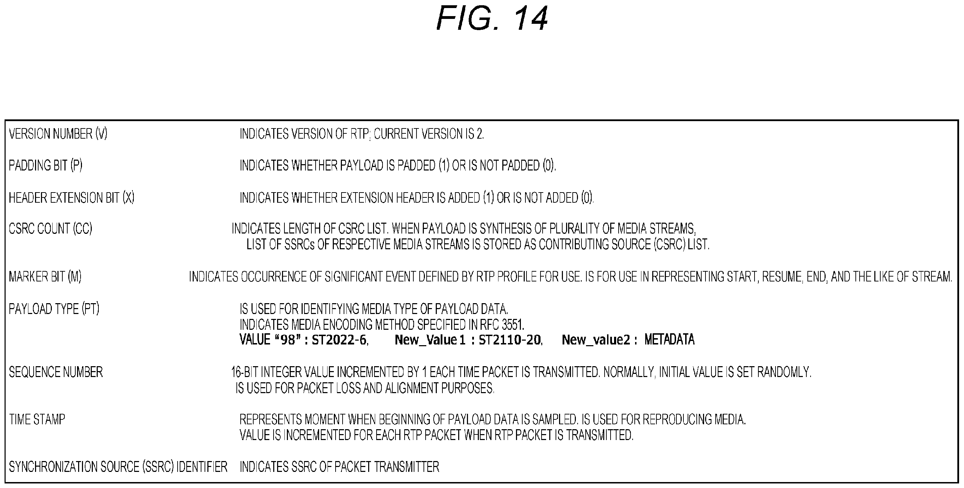

Fig. 13 illustrates a structure example (syntax) of the RTP header, and Fig. 14 shows contents (semantics) of main information in the structure example. A version number (V) indicates a version of RTP, and a current version is 2. A padding bit (P) indicates whether the payload is padded (1) or not padded (0).
A header extension bit (X) indicates whether an extension header is added (1) or not added (0). A CSRC count (CC) indicates a length of a CSRC list. In a case where the payload is a synthesis of a plurality of media streams, an SSRC list of the respective media streams is stored as a contributing source (CSRC) list.
A marker bit (M) indicates an occurrence of a significant event defined by an RTP profile for use. The marker bit (M) is used for indicating the start, resume, end, and the like of a stream. A payload type (PT) is used to identify a media type of the payload data, and indicates the media encoding method specified in RFC 3551. For example, the value "98" indicates "ST2022-6", the newly defined "New_Value1" indicates "ST2110-20", and the newly defined "New_Value2" indicates "metadata".
A sequence number is an unsigned 16-bit integer value that is incremented by 1 each time a packet is transmitted. Normally, an initial value is set randomly. The sequence number is used for packet loss and alignment purposes. A time stamp represents a moment when the beginning of the payload data is sampled. The time stamp is used for reproducing media. A value is incremented for each packet when the RTP packet is transmitted.
A synchronous source (SSRC) identifier indicates an SSRC of a packet transmitter.

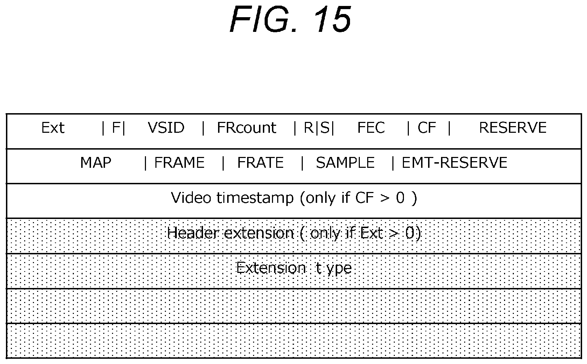

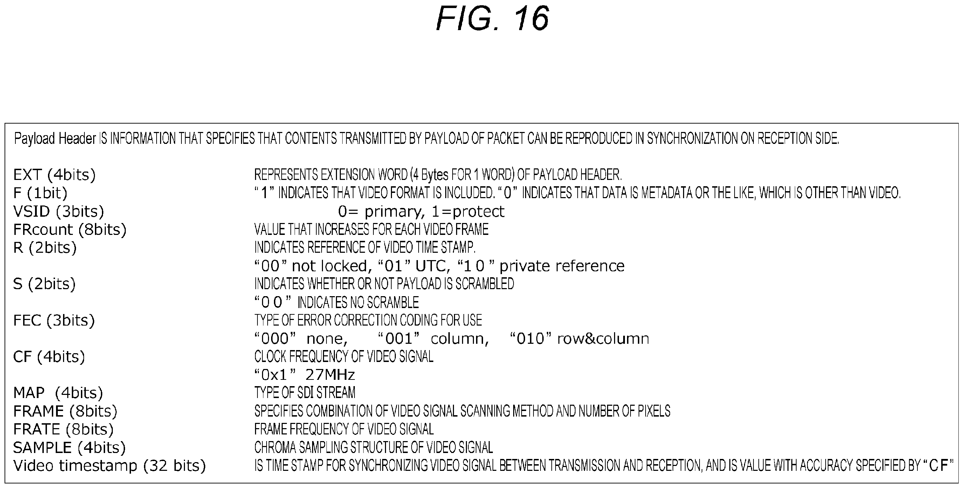

Fig. 15 illustrates a structure example (syntax) of the payload header, and Fig. 16 shows contents (semantics) of main information in the structure example. This payload header is information that specifies that contents to be transmitted by the payload of the packet can be reproduced in synchronization on the reception side.
A 4-bit field of "Ext" represents the number of extension words (4 bytes for 1 word) of the payload header. In a 1-bit field of "F", "1" indicates that a video format is included, and "0" indicates that data is metadata or the like, which is other than a video. In a case where the data is other than a video, subsequent elements, "FRcount", "R", "FRAME", and "FRATE" have no meaning.

In a 3-bit field of "VSID", "0" indicates "primary", and "1" indicates "protect". An 8-bit field of "FRcount" indicates a value that increases for each video frame. A 2-bit field of "R" indicates a reference of a video timestamp. "00" indicates "not locked", "01" indicates "UTC", and "10" indicates "private reference".

A 2-bit field of "S" indicates whether or not the payload is scrambled. "00" indicates no scramble. A 3-bit field of "FEC" indicates a type of error correction code for use. "000" indicates "none", "001" indicates "column", and "010" indicates "row & column".

A 4-bit field of "CF" indicates a clock frequency of a video signal. "0×1" indicates 27 MHz. A 4-bit field of "MAP" indicates a type of SDI stream. An 8-bit field of "FRAME" specifies a combination of a scanning method, the number of pixels, and the like in the video signal.

An 8-bit field of "FRATE" indicates a frame frequency of the video signal. A 4-bit field of "SAMPLE" indicates a chroma sampling structure of the video signal. A 32-bit field of "Video timestamp" is a time stamp that is present when the value of "CF" is larger than 0 and serves for synchronizing the video signal between transmission and reception, and is a value that specifies accuracy by the clock frequency of the video signal.

In this payload header, when the value of "Ext" is greater than 0, there are as many fields of "Header extension" as the number of words indicated by the value of "Ext". This field also includes information of "Extension type" that indicates an extension type. In the first method, "shutter_blending ()" as metadata including information related to the mixing process is inserted into this field of "Header extension".

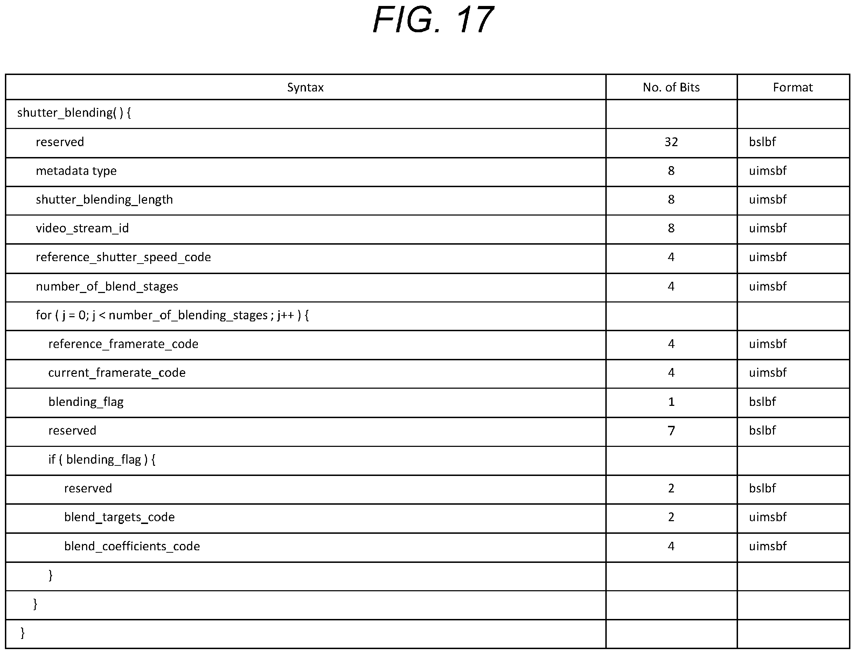

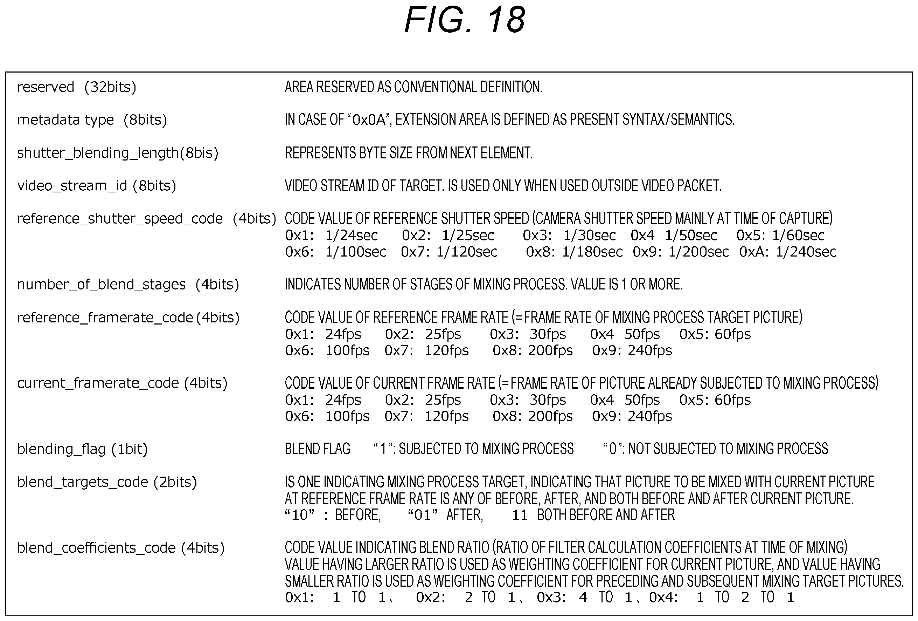

Fig. 17 illustrates a structure example (syntax) of "shutter_blending()", and Fig. 18 shows contents (semantics) of main information in the structure example. An 8-bit area of "metadata type" indicates a metadata type. In the case of "0×0A", an extension area is defined as the present syntax/semantics.

An 8-bit field of "shutter_blending_length" represents a byte size from a next element. An 8-bit field of "video_stream_id" is a video stream ID of a target. These 8-bit fields are used only when used outside a video packet.

A 4-bit field of "reference_shutter_speed_code" is a code value of the reference shutter speed (mainly a camera shutter speed at the time of capture). For example, "0×1" indicates 1/24 sec, "0×2" indicates 1/25 sec, "0×3" indicates 1/30 sec, "0×4" indicates 1/50 sec, "0×5" indicates 1/60 sec, "0×6" indicates 1/100 sec, "0×7" indicates 1/120 sec, "0×8" indicates 1/180 sec, "0×9" indicates 1/200 sec, and "0×A" indicates 1/240 sec.

A 4-bit field of "number_of_blend_stages" indicates the number of stages of the mixing process. A value is 1 or greater. The following elements are repeatedly present for this number of stages.

A 4-bit field of "reference _framerate_code" is a code value of a reference frame rate (= frame rate of mixing process target picture). For example, "0×1" indicates 24 fps, "0×2" indicates 25 fps, "0×3" indicates 30 fps, "0×4" indicates 50 fps, "0×5" indicates 60 fps, "0×6" indicates 100 fps, "0×7" indicates 120 fps, "0×8" indicates 200 fps, and "0×9" indicates 240 fps.

A 4-bit field of "current_framerate_code" is a code value of the current frame rate (= frame rate of picture already subjected to mixing process). For example, "0×1" indicates 24 fps, "0×2" indicates 25 fps, "0×3" indicates 30 fps, "0×4" indicates 50 fps, "0×5" indicates 60 fps, "0×6" indicates 100 fps, "0×7" indicates 120 fps, "0×8" indicates 200 fps, and "0×9" indicates 240 fps.

A 1-bit field of "blending_flag" is a blend flag indicating whether or not the mixing process is performed. "1" indicates that the mixing process is performed, and "0" indicates that the mixing process is not performed. When the blend flag is "1", the following elements are present.

A 2-bit field of "blend_targets_code" indicates the mixing process target. "blend_targets_code" indicates whether a picture to be mixed with the current picture at the reference frame rate is before, after, or both before and after the current picture. For example, "10" indicates "before", "01" indicates "after", and "11" indicates "both before and after".

A 4-bit field of "blend_coefficients _code" is a code value indicating a blend ratio (ratio of filter calculation coefficients when mixed). A value having a large ratio is used as a weighting coefficient for the current picture, and a value having a small ratio is used as a weighting coefficient for the preceding and subsequent mixing target pictures. For example, "0×1" means "1 to 1", "0×2" means "2 to 1", "0×3" means "4 to 1", and "0×4" means "1 to 2 to 1".

"Specific examples of metadata"

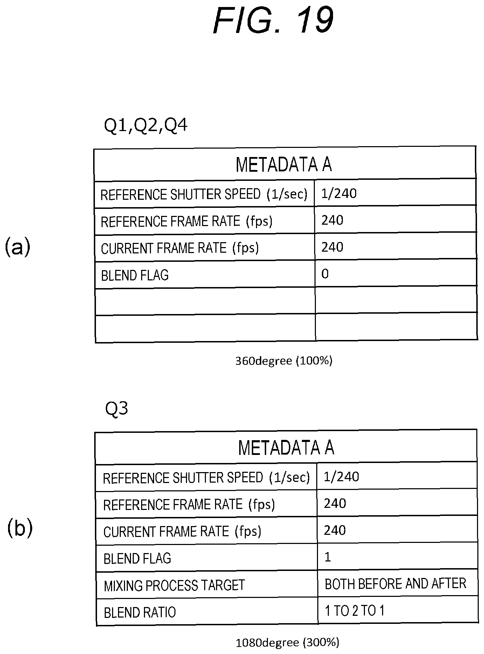

First, a description will be given of a specific example of metadata in the case of transmitting, to the reception side, the image data in the low frame rate compatible mode, which is shown in Fig. 9(b) and subjected to the mixing process. Fig. 19(a) shows a specific example of the metadata (metadata A) transmitted in association with the image data in the frames of Q1, Q2, and Q4. In this case, the reference shutter speed is 1/240 sec, the reference frame rate is 240 fps, the current frame rate is 240 fps, and the blend flag is "0".

In this case, it can be seen that the original shutter angle is 360 degrees (100%) on the reception side from the reference shutter speed and the reference frame rate. Moreover, since the current frame rate is the same as the reference frame rate, it can be seen that the shutter angle of the frame is 360 degrees (100%). Furthermore, from the blend flag, it can be seen that the image data in the frame is not subjected to the mixing process.

Fig. 19(b) shows a specific example of the metadata (metadata A) transmitted in association with the image data in the frame of Q3. In this case, the reference shutter speed is 1/240 sec, the reference frame rate is 240 fps, the current frame rate is 240 fps, the blend flag is "1", the mixing process target is both before and after, and the blend ratio is 1 to 2 to 1.

In this case, it can be seen that the original shutter angle is 360 degrees (100%) on the reception side from the reference shutter speed and the reference frame rate. Moreover, from the mixing process target, it can be seen that the image data of the frame is a mixture of three pictures at a ratio of 1 to 2 to 1 with both the preceding and subsequent pictures taken as the mixing process target. Conversion of the shutter angle by this mixing process is 360*3 = 1080 degrees (300%). Since the current frame rate is the same as the reference frame rate, it can be seen that the shutter angle of the frame is 360 degrees (100%).

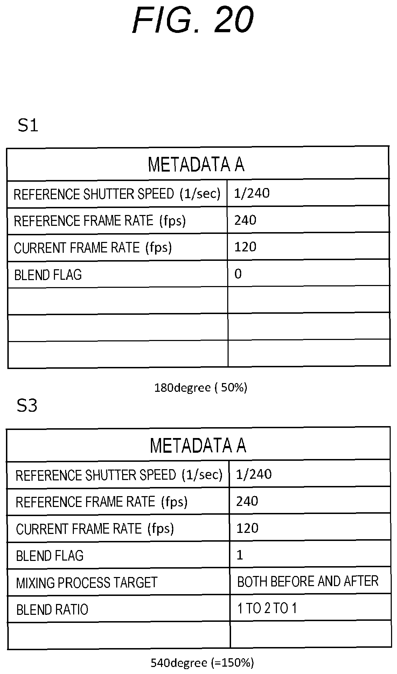

Next, a description will be given of a specific example of metadata in the case of transmitting, to the reception side, the image data in the low frame rate compatible mode, which is shown in Fig. 10(b) and subjected to the mixing process. Fig. 20(a) shows a specific example of the metadata (metadata A) transmitted in association with the image data in the frame of S1.

In this case, the reference shutter speed is 1/240 sec, the reference frame rate is 240 fps, the current frame rate is 120 fps, and the blend flag is "0".

In this case, it can be seen that the original shutter angle is 360 degrees (100%) on the reception side from the reference shutter speed and the reference frame rate. Moreover, since a time axis of the current frame rate is doubled with respect to a time axis of the reference frame rate, it can be seen that the shutter angle of the frame is 180 degrees (50%). Furthermore, from the blend flag, it can be seen that the image data in the frame is not subjected to the mixing process.

Fig. 20(b) shows a specific example of the metadata (metadata A) transmitted in association with the image data in the frame of S3. In this case, the reference shutter speed is 1/240 sec, the reference frame rate is 240 fps, the current frame rate is 120 fps, the blend flag is "1", the mixing process target is both before and after, and the blend ratio is 1 to 2 to 1.

In this case, it can be seen that the original shutter angle is 360 degrees (100%) on the reception side from the reference shutter speed and the reference frame rate. Moreover, from the mixing process target, it can be seen that the image data of the frame is a mixture of three pictures at a ratio of 1 to 2 to 1 with both the preceding and subsequent pictures taken as the mixing process target. Conversion of the shutter angle by this mixing process is 360*3 = 1080 degrees (300%). Since a time axis of the current frame rate is doubled with respect to a time axis of the reference frame rate, it can be seen that the shutter angle of the frame is 540 degrees (150%).

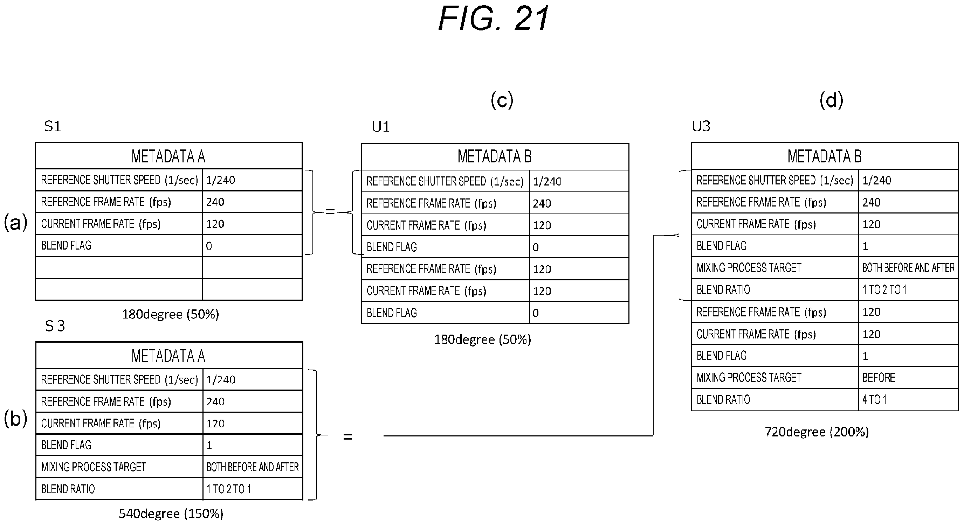

Next, a description will be given of a specific example of metadata in the case of transmitting, to the reception side, the image data in the low frame rate compatible mode, which is shown in Fig. 11(c) and subjected to the two-stage mixing process. Figs. 21(a) and 21(b) show specific examples of metadata (metadata A) transmitted in association with the image data in the frames of S1 and S3 in Fig. 11(b). Although a detailed description is omitted, these metadata (metadata A) are similar to those in Figs. 20(a) and 20(b) mentioned above.

Fig. 21(c) shows a specific example of metadata (metadata B) transmitted in association with the image data in the frame of U1. This metadata (metadata B) includes information related to a first-stage mixing process shown in Fig. 21(a), and information related to a second-stage mixing process. With regard to the second-stage mixing process, a reference frame rate is 120 fps, a current frame rate is 120 fps, and a blend flag is "0".

In this case, on the reception side, since the current frame rate is the same as the reference frame rate, it can be seen that the shutter angle of the frame is 360 degrees (100%) like the shutter angle of the S1 frame. Moreover, from the blend flag, it can be seen that the image data in the frame is not subjected to the mixing process.

Fig. 21(d) shows a specific example of metadata (metadata B) transmitted in association with the image data in the frame of U3. This metadata (metadata B) includes information related to a first-stage mixing process shown in Fig. 21(b), and information related to a second-stage mixing process. With regard to the second-stage mixing process, a reference frame rate is 120 fps, a current frame rate is 120 fps, a blend flag is "1", a mixing process target is a preceding one, and a blend ratio is 4 to 1.

In this case, from the mixing process target, it can be seen that the image data of the frame is a mixture of two pictures at a ratio of 4 to 1 with the preceding picture taken as the mixing process target. From this mixing process, it can be seen that the shutter angle of the frame is 540 + 180 = 720 degrees (200%).

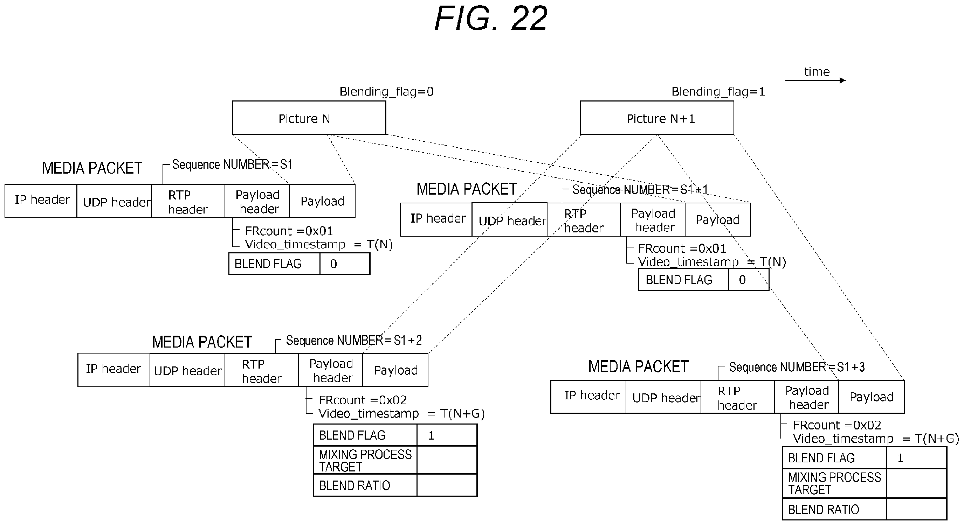

Fig. 22 is a diagram illustrating an example in which a picture is transmitted by a plurality of packets (media packets) in RTP transmission. This example shows a state in which a picture is divided into two RTP packets; however, the present technology is not limited to this, and for example, a plurality of lines of the picture may be sent by one packet, and one picture may be transmitted by a plurality of packets. Moreover, in this example, an example in which the metadata is inserted into the payload header of each of all the packets is shown; however, the metadata is only required to be inserted into the payload header of the packet including at least the beginning of the image data of each frame. Note that, though only a video is drawn in this example, in reality, ST2022-6 allows a video and an audio to be mixed with each other.

"Second method"

The second method is to transmit the metadata by a metadata-only packet associated with the packet including the image data of each frame.

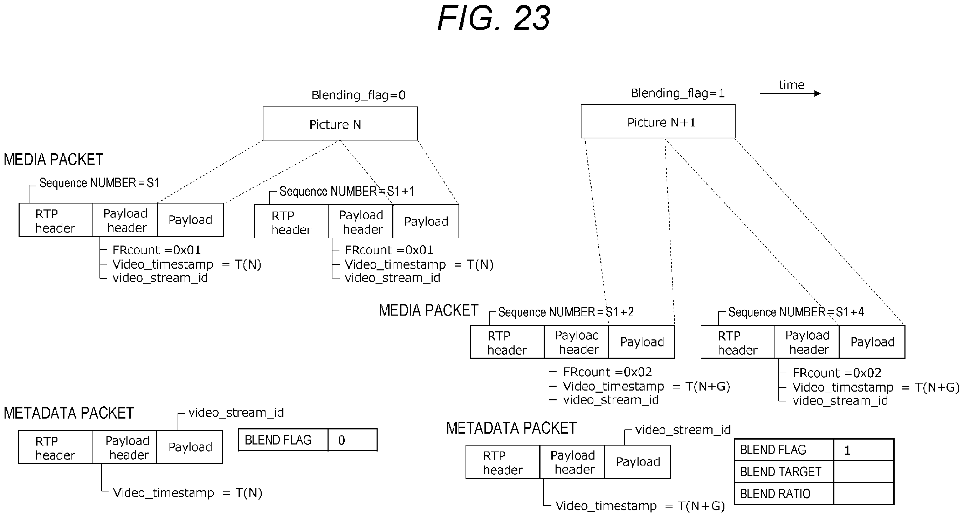

Like Fig. 22, Fig. 23 illustrates an example in which a picture is transmitted by a plurality of packets (media packets) in the RTP transmission. Note that, in this example, the UDP header and the OP header are not shown for the sake of simplification of the drawing.

In the example of Fig. 23, a metadata packet is present in addition to the media packet. In the second method, the metadata packet is newly defined, and this metadata packet is used to transmit the metadata including the information, which is related to the mixing process, in association with each frame. In this case, a target video packet of the metadata is linked by "video_stream_id". Moreover, a target picture is synchronized by "Video_timestamp".

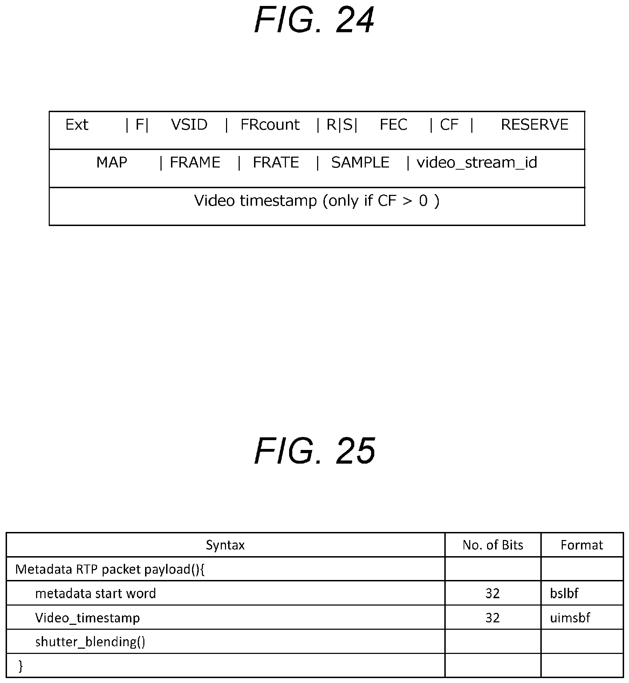

Fig. 24 illustrates a structure example (syntax) of the payload header in this case. For this payload header, "video_stream_id" is newly defined using a reserve area, for example, "EMT-RESERVE". This "video_stream_id" has a value uniquely determined in program distribution.

Then, a linkage with another delivery packet can be made (see Fig. 23).

Note that, though a detailed description will be omitted, other structures of the payload header are the similar to those of the structure example illustrated in Fig. 15. However, in this case, there is no metadata inserted into this payload header. Note that "Video_timestamp" is present in this payload header.

The metadata is distributed by a payload of an RTP packet other than the video. Then, by "video_stream_id" and "Video_timestamp", the metadata can be synchronized/associated with each picture of the video taken as a target. In this case, "New_value2" is put in the payload type (PT) of the RTP header, and "0" is put in "F" of the payload header, and indicates that the payload is not a video. Format data of "shutter_blending ()" is inserted into an area of the payload as it is, and is transmitted.

Fig. 25 illustrates a structure example (syntax) of a payload header and a payload in the metadata packet. In a payload header area, a 32-bit field of "metadata start word", which is identification information of the metadata packet, and a 32-bit field of "Video_timestamp" are present. Then, "shutter_blending ()" (see Fig. 17) as metadata including information related to the mixing process is inserted into a payload area.
"video_stream_id" is present in this "shutter_blending ()".

As described above, on the transmission side (shooting/production/sending) of the transmission/reception system 10 illustrated in Figs. 2 and 3, when the predetermined frame frequency image data subjected to the mixing process is packetized and transmitted to the next stage, the metadata including the information related to the mixing process is also transmitted in association with the image data of each frame. Therefore, it is made possible to satisfactorily handle the material of the image data on the reception side, for example, when the material is transmitted, the image data being subjected to the mixing process.

<2. Modified example>

Note that, in the above-mentioned embodiment, the packet of the "ST 2022-6" standard has been described as an example of the packet that containerizes image data (video data). However, the present technology can also be applied in a similar manner in a case where the packet that containerizes the image data is another packet, for example, a packet of the "ST 2110-20" standard. In the case of this packet according to the "ST 2110-20" standard, only a video is inserted into the payload.

Moreover, though the preferred embodiments of the present disclosure have been described in detail with reference to the accompanying drawings, the technical scope of the present disclosure is not limited to such examples. It is obvious that a person having ordinary knowledge in the technical field of the present disclosure can come up with various modified examples or revised examples within the scope of the technical idea described in the patent claims, and it is naturally understood that these also belong to the technical scope of the present disclosure.

Moreover, the effects described in the present description are merely explanatory or exemplary and are not restrictive. That is, the technology according to the present disclosure may exert other effects apparent to those skilled in the art from the description of the present description, in addition to the above-described effects or in place of the above-described effects.

Moreover, the present technology can also adopt the following configurations.

(1) A transmission apparatus including:

a transmission unit that transmits a packet including, as payload data, divided image data obtained by dividing predetermined frame frequency image data into a predetermined number for each frame, in which
the predetermined frame frequency image data is subjected to a mixing process selectively using preceding and/or subsequent frame image data for each frame, and
the transmission unit further transmits metadata in association with the image data of each frame, the metadata including information related to the mixing process.

(2) The transmission apparatus according to the (1), in which
the transmission unit inserts the metadata into a payload header of the packet including at least a beginning of the image data of each frame, and transmits the metadata.
(3) The transmission apparatus according to the (1), in which
the transmission unit transmits the metadata by a metadata-only packet associated with the packet including the image data of each frame.
(4) The transmission apparatus according to claim any one of the (1) to the (3), in which
the information related to the mixing process includes information indicating whether or not the image data of the corresponding frame is subjected to the mixing process.
(5) The transmission apparatus according to any one of the (1) to the (4), in which
the information related to the mixing process includes information of a camera shutter speed at a time of capture.
(6) The transmission apparatus according to any one of the (1) to the (5), in which
the information related to the mixing process includes information of a frame rate of a mixing process target picture.
(7) The transmission apparatus according to any one of the (1) to the (6), in which
the information related to the mixing process includes information of a frame rate after the mixing process.
(8) The transmission apparatus according to any one of the (1) to the (7), in which
the information related to the mixing process includes information indicating a mixing process target picture.
(9) The transmission apparatus according to any one of the (1) to the (8), in which
the information related to the mixing process includes information indicating a ratio of filter calculation coefficients when mixed.
(10) The transmission apparatus according to any one of the (1) to the (9), in which
the mixing process includes predetermined stages of mixing process.
(11) The transmission apparatus according to any one of the (1) to the (10), in which
the packet conforms to a format specified by a standard related to video signal transmission using an Internet Protocol (IP) network.
(12) The transmission apparatus according to the (11), in which
the standard is SMPTE ST2022-6.
(13) The transmission apparatus according to the (11), in which
the standard is SMPTE ST2110-20.
(14) The transmission apparatus according to any one of the (1) to the (13), further including
a mixing process unit that performs the mixing process.
(15) A transmission method including:

a procedure of transmitting a packet including, as payload data, divided image data obtained by dividing predetermined frame frequency image data into a predetermined number for each frame, in which
the predetermined frame frequency image data is subjected to a mixing process selectively using preceding and/or subsequent frame image data for each frame, and
the transmission method further includes a procedure of transmitting metadata in association with the image data of each frame, the metadata including information related to the mixing process.

(16) A coding apparatus including:

a reception unit that receives a packet including, as payload data, divided image data obtained by dividing predetermined frame frequency image data into a predetermined number for each frame, in which
the predetermined frame frequency image data is subjected to a mixing process selectively using preceding and/or subsequent frame image data for each frame,
the reception unit further receives metadata including information related to the mixing process, the metadata being associated with the image data of each frame,
the information related to the mixing process includes information indicating whether or not the image data of the corresponding frame is subjected to the mixing process, and
the coding apparatus further includes an encoding unit that, on the basis of the information related to the mixing process, encodes, as image data of a base layer, the image data of the frame in the predetermined frame frequency image data, the image data being subjected to the mixing process, and encodes, as image data of an enhanced layer, image data of a frame in the predetermined frame frequency image data, the image data not being subjected to the mixing process.

(17) A coding method including:

a procedure of receiving a packet including, as payload data, divided image data obtained by dividing predetermined frame frequency image data into a predetermined number for each frame, in which
the predetermined frame frequency image data is subjected to a mixing process selectively using preceding and/or subsequent frame image data for each frame,
the coding method includes a procedure of receiving metadata including information related to the mixing process, the metadata being associated with the image data of each frame,
the information related to the mixing process includes information indicating whether or not the image data of the corresponding frame is subjected to the mixing process, and
the coding method further includes a procedure of, on the basis of the information related to the mixing process, encoding, as image data of a base layer, the image data of the frame in the predetermined frame frequency image data, the image data being subjected to the mixing process, and encoding, as image data of an enhanced layer, image data of a frame in the predetermined frame frequency image data, the image data not being subjected to the mixing process.

(18) A reception apparatus including:

a reception unit that receives a packet including, as payload data, divided image data obtained by dividing predetermined frame frequency image data into a predetermined number for each frame, in which
the predetermined frame frequency image data is subjected to a mixing process selectively using preceding and/or subsequent frame image data for each frame,
the reception unit further receives metadata including information related to the mixing process, the metadata being associated with the image data of each frame, and
the reception apparatus further includes a process unit that implements a reverse mixing process for the predetermined frame frequency image data on the basis of the information related to the mixing process and obtains image data for display.

(19) A reception method including:

a procedure of receiving a packet including, as payload data, divided image data obtained by dividing predetermined frame frequency image data into a predetermined number for each frame, in which
the predetermined frame frequency image data is subjected to a mixing process selectively using preceding and/or subsequent frame image data for each frame, and
the reception method further includes:

a procedure of receiving metadata including information related to the mixing process, the metadata being associated with the image data of each frame; and
a procedure of implementing a reverse mixing process for the predetermined frame frequency image data on the basis of the information related to the mixing process and obtaining image data for display.

REFERENCE SIGNS LIST

10 Transmission/reception system
101 Camera
101a Preprocessor
102 Broadcasting center
102a HLP unit
102b Encoder
103 Edition apparatus
103a HLP unit

103b Preprocessor
211, 221, 231 Set top box
211a, 221a HLP unit
211b, 221b, 231a Decoder
212, 222, 232 Display
212a, 222a Postprocessor
212b, 222b, 232a MCFI unit

**Claims**

1. A transmission apparatus comprising:

   a transmission unit that transmits a packet including, as payload data, divided image data obtained by dividing predetermined frame frequency image data into a predetermined number for each frame, wherein
   the predetermined frame frequency image data is subjected to a mixing process selectively using preceding and/or subsequent frame image data for each frame, and
   the transmission unit further transmits metadata in association with the image data of each frame, the metadata including information related to the mixing process.

2. The transmission apparatus according to claim 1, wherein
   the transmission unit inserts the metadata into a payload header of the packet including at least a beginning of the image data of each frame, and transmits the metadata.

3. The transmission apparatus according to claim 1, wherein
   the transmission unit transmits the metadata by a metadata-only packet associated with the packet including the image data of each frame.

4. The transmission apparatus according to claim 1, wherein
   the information related to the mixing process includes information indicating whether or not the image data of the corresponding frame is subjected to the mixing process.

5. The transmission apparatus according to claim 1, wherein
   the information related to the mixing process includes information of a camera shutter speed at a time of capture.

6. The transmission apparatus according to claim 1, wherein
   the information related to the mixing process includes information of a frame rate of a mixing process target picture.

7. The transmission apparatus according to claim 1, wherein
   the information related to the mixing process includes information of a frame rate after the mixing process.

8. The transmission apparatus according to claim 1, wherein
   the information related to the mixing process includes information indicating a mixing process target picture.

9. The transmission apparatus according to claim 1, wherein
   the information related to the mixing process includes information indicating a ratio of filter calculation coefficients when mixed.

10. The transmission apparatus according to claim 1, wherein
    the mixing process includes predetermined stages of mixing process.

11. The transmission apparatus according to claim 1, wherein
    the packet conforms to a format specified by a standard related to video signal transmission using an Internet Protocol (IP) network.

12. The transmission apparatus according to claim 11, wherein
    the standard is SMPTE ST2022-6.

**13.** The transmission apparatus according to claim 11, wherein
the standard is SMPTE ST2110-20.

**14.** The transmission apparatus according to claim 1, further comprising
a mixing process unit that performs the mixing process.

**15.** A transmission method comprising:

a procedure of transmitting a packet including, as payload data, divided image data obtained by dividing predetermined frame frequency image data into a predetermined number for each frame, wherein
the predetermined frame frequency image data is subjected to a mixing process selectively using preceding and/or subsequent frame image data for each frame, and
the transmission method further comprises a procedure of transmitting metadata in association with the image data of each frame, the metadata including information related to the mixing process.

**16.** A coding apparatus comprising:

a reception unit that receives a packet including, as payload data, divided image data obtained by dividing predetermined frame frequency image data into a predetermined number for each frame, wherein
the predetermined frame frequency image data is subjected to a mixing process selectively using preceding and/or subsequent frame image data for each frame,
the reception unit further receives metadata including information related to the mixing process, the metadata being associated with the image data of each frame,
the information related to the mixing process includes information indicating whether or not the image data of the corresponding frame is subjected to the mixing process, and
the coding apparatus further comprises an encoding unit that, on a basis of the information related to the mixing process, encodes, as image data of a base layer, the image data of the frame in the predetermined frame frequency image data, the image data being subjected to the mixing process, and encodes, as image data of an enhanced layer, image data of a frame in the predetermined frame frequency image data, the image data not being subjected to the mixing process.

**17.** A coding method comprising:

a procedure of receiving a packet including, as payload data, divided image data obtained by dividing predetermined frame frequency image data into a predetermined number for each frame, wherein
the predetermined frame frequency image data is subjected to a mixing process selectively using preceding and/or subsequent frame image data for each frame,
the coding method comprises a procedure of receiving metadata including information related to the mixing process, the metadata being associated with the image data of each frame,
the information related to the mixing process includes information indicating whether or not the image data of the corresponding frame is subjected to the mixing process, and
the coding method further comprises a procedure of, on a basis of the information related to the mixing process, encoding, as image data of a base layer, the image data of the frame in the predetermined frame frequency image data, the image data being subjected to the mixing process, and encoding, as image data of an enhanced layer, image data of a frame in the predetermined frame frequency image data, the image data not being subjected to the mixing process.

**18.** A reception apparatus comprising:

a reception unit that receives a packet including, as payload data, divided image data obtained by dividing predetermined frame frequency image data into a predetermined number for each frame, wherein
the predetermined frame frequency image data is subjected to a mixing process selectively using preceding and/or subsequent frame image data for each frame,
the reception unit further receives metadata including information related to the mixing process, the metadata being associated with the image data of each frame, and
the reception apparatus further comprises a process unit that implements a reverse mixing process for the predetermined frame frequency image data on a basis of the information related to the mixing process and obtains image data for display.

**19.** A reception method comprising:

a procedure of receiving a packet including, as payload data, divided image data obtained by dividing predetermined frame frequency image data into a predetermined number for each frame, wherein
the predetermined frame frequency image data is subjected to a mixing process selectively using preceding and/or subsequent frame image data for each frame, and
the reception method further comprises:

a procedure of receiving metadata including information related to the mixing process, the metadata being associated with the image data of each frame; and
a procedure of implementing a reverse mixing process for the predetermined frame frequency image data on a basis of the information related to the mixing process and obtaining image data for display.

## FIG. 1

(a)

```
BROADCAST FLOW

  ┌──────────────┐         ┌──────────┐         ┌──────────┐
  │  SHOOTING/    │  ═══>   │ SENDING  │  ═══>   │RECEPTION/ │
  │  PRODUCTION   │         │          │         │ DISPLAY   │
  └──────────────┘         └──────────┘         └──────────┘
```

(b)

DRONE
PreProc — MATERIAL VIDEO →

RELAY VEHICLE
PreProc

BROADCAST STATION — BROADCAST WAVE →

MATERIAL VIDEO

CAMERA
PreProc

RELAY STATION
PreProc

STUDIO CAMERA
PreProc

MATERIAL VIDEO

STADIUM

MATERIAL VIDEO

VIDEO MATERIAL SERVER
PreProc

→ TRANSMISSION TARGET ACCORDING TO SMPTE STANDARD

*FIG. 2*

TRANSMISSION SIDE
(SHOOTING/PRODUCTION/SENDING)

RECEPTION SIDE
(RECEPTION/DISPLAY)

# FIG. 3

## TRANSMISSION SIDE
### (SHOOTING/PRODUCTION/SENDING)

101 · Camera · 101a · PreProc

METADATA A

103 · Production device · 103a · HLP · 103b · Preproc

METADATA B

102 · Broadcasting center · 102a · HLP · 102b · Encoder

METADATA
STe2(2nd Enhanced)
STe1(1st Enhanced)
STb(Base)

EP 3 905 702 A1

# FIG. 4

# FIG. 5

METADATA

102a

HLP

Blending_flag

IMAGE DATA SUBJECTED
TO MIXING PROCESS

Encoder

102b

# FIG. 6

SWITCHING OF PICTURE BUFFER REFERENCE

(a)

| Picture N | Picture N+1 | Picture N+2 | Picture N+3 |
|---|---|---|---|
| Blending_flag=0 | Blending_flag=1 | Blending_flag=0 | Blending_flag=1 |
| TO REFERENCE BUFFER (Enhanced layer) | TO REFERENCED BUFFER (Base layer) | TO REFERENCE BUFFER (Enhanced layer) | TO REFERENCED BUFFER (Base layer) |

(b)

Enhanced layer

N      N+2

Base layer

N+1      N+3

*FIG. 7*

SHUTTER RATE AT TIME OF SHOOTING  *a*=360 degree (100%)  @240Hz

(a)

P1  240 fps  P2  P3  P4  P1  P2  P3  P4

1/240 sec

TIME

SHUTTER RATE AT TIME OF SHOOTING  *a*=288 degree (80%)  @240Hz

(b)

P1  240 fps  P2  P3  P4  P1  P2  P3  P4

1/300 sec

TIME

EP 3 905 702 A1

# FIG. 8

| SHUTTER SPEED (1/sec) | TRANSMISSION FRAME RATE (fps) | SHUTTER ANGLE (degree) |
|---|---|---|
| 240 | 240 | 360 |
| 300 | 240 | 288 |
| 240 | 120 | 180 |
| 120 | 60 | 180 |

# FIG. 9

(a)
INCOMPATIBLE MODE
TRANSMISSION AT 240Hz

P1  P2  P3  P4  P1  P2  P3  P4

$Q3 = t (P2, P3, P4)$

(b)
LOW FRAME RATE
COMPATIBLE MODE
TRANSMISSION AT 240Hz

Q1 (= P1)  Q2 (= P2)  Q4 (= P4)  Q1  Q2  Q3  Q4

$R3(= Q3)$  R3

(c)
DISPLAY AT 60Hz

TIME

EP 3 905 702 A1

# FIG. 10

(a)
INCOMPATIBLE MODE
TRANSMISSION AT 240Hz

(b)
LOW FRAME RATE
COMPATIBLE MODE
TRANSMISSION AT 120Hz

(c)
DISPLAY AT 60Hz

P1    P2    P3    P4    P1    P2    P3    P4

S1 (= P1)    S3 = t (P2, P3, P4)    S1    S3

T3 (= S3)    T23

TIME

EP 3 905 702 A1

*FIG. 11*

(a)
INCOMPATIBLE MODE
TRANSMISSION AT 240Hz

(b)
LOW FRAME RATE
COMPATIBLE MODE
TRANSMISSION AT 120Hz
MIXED ON FIRST STAGE

(c)
LOW FRAME RATE
COMPATIBLE MODE
TRANSMISSION AT 120Hz
MIXED ON SECOND STAGE

(d)
DISPLAY AT 60Hz

TIME

# FIG. 12

RTR Header  Payload Header  Media Payload

| 12 bytes | (4,8, or 12) bytes + (1 TO 15) × 4 bytes | 1376 bytes |

# FIG. 13

| N | N+1-TH BYTE | | | | N+2-TH BYTE | | N+3-TH BYTE | N+4-TH BYTE |
|---|---|---|---|---|---|---|---|---|
| 0 | V | P | X | CC | M | PT(PAYLOAD TYPE) | SEQUENCE NUMBER | |
| 4 | TIME STAMP | | | | | | | |
| 8 | SYNCHRONIZATION SOURCE (SSRC) IDENTIFIER | | | | | | | |

# FIG. 14

| | |
|---|---|
| VERSION NUMBER (V) | INDICATES VERSION OF RTP; CURRENT VERSION IS 2. |
| PADDING BIT (P) | INDICATES WHETHER PAYLOAD IS PADDED (1) OR IS NOT PADDED (0). |
| HEADER EXTENSION BIT (X) | INDICATES WHETHER EXTENSION HEADER IS ADDED (1) OR IS NOT ADDED (0). |
| CSRC COUNT (CC) | INDICATES LENGTH OF CSRC LIST. WHEN PAYLOAD IS SYNTHESIS OF PLURALITY OF MEDIA STREAMS, LIST OF SSRCs OF RESPECTIVE MEDIA STREAMS IS STORED AS CONTRIBUTING SOURCE (CSRC) LIST. |
| MARKER BIT (M) | INDICATES OCCURRENCE OF SIGNIFICANT EVENT DEFINED BY RTP PROFILE FOR USE. IS FOR USE IN REPRESENTING START, RESUME, END, AND THE LIKE OF STREAM. |
| PAYLOAD TYPE (PT) | IS USED FOR IDENTIFYING MEDIA TYPE OF PAYLOAD DATA. INDICATES MEDIA ENCODING METHOD SPECIFIED IN RFC 3551. **VALUE "98" : ST2022-6,     New_Value 1 : ST2110-20,     New_value2 : METADATA** |
| SEQUENCE NUMBER | 16-BIT INTEGER VALUE INCREMENTED BY 1 EACH TIME PACKET IS TRANSMITTED. NORMALLY, INITIAL VALUE IS SET RANDOMLY. IS USED FOR PACKET LOSS AND ALIGNMENT PURPOSES. |
| TIME STAMP | REPRESENTS MOMENT WHEN BEGINNING OF PAYLOAD DATA IS SAMPLED. IS USED FOR REPRODUCING MEDIA. VALUE IS INCREMENTED FOR EACH RTP PACKET WHEN RTP PACKET IS TRANSMITTED. |
| SYNCHRONIZATION SOURCE (SSRC) IDENTIFIER | INDICATES SSRC OF PACKET TRANSMITTER |

EP 3 905 702 A1

# FIG. 15

| Ext | | F| | VSID | | FRcount | | R|S| | FEC | | CF | | RESERVE |
|---|---|---|---|---|---|---|---|---|---|---|---|---|
| MAP | | | FRAME | | FRATE | | SAMPLE | | EMT-RESERVE | | | |
| Video timestamp (only if CF > 0 ) | | | | | | | | | | | | |
| Header extension ( only if Ext > 0) | | | | | | | | | | | | |
| Extension type | | | | | | | | | | | | |
| | | | | | | | | | | | | |
| | | | | | | | | | | | | |

## FIG. 16

| | |
|---|---|
| Payload Header IS INFORMATION THAT SPECIFIES THAT CONTENTS TRANSMITTED BY PAYLOAD OF PACKET CAN BE REPRODUCED IN SYNCHRONIZATION ON RECEPTION SIDE. | |
| EXT (4bits) | REPRESENTS EXTENSION WORD (4 Bytes FOR 1 WORD) OF PAYLOAD HEADER. |
| F (1bit) | "1" INDICATES THAT VIDEO FORMAT IS INCLUDED. "0" INDICATES THAT DATA IS METADATA OR THE LIKE, WHICH IS OTHER THAN VIDEO. |
| VSID (3bits) | 0= primary, 1=protect |
| FRcount (8bits) | VALUE THAT INCREASES FOR EACH VIDEO FRAME |
| R (2bits) | INDICATES REFERENCE OF VIDEO TIME STAMP. |
| | "00" not locked, "01" UTC, "1 0 " private reference |
| S (2bits) | INDICATES WHETHER OR NOT PAYLOAD IS SCRAMBLED |
| | "0 0 " INDICATES NO SCRAMBLE |
| FEC (3bits) | TYPE OF ERROR CORRECTION CODING FOR USE |
| | "000" none,    "001" column,    "010" row&column |
| CF (4bits) | CLOCK FREQUENCY OF VIDEO SIGNAL |
| | "0x1" 27MHz |
| MAP (4bits) | TYPE OF SDI STREAM |
| FRAME (8bits) | SPECIFIES COMBINATION OF VIDEO SIGNAL SCANNING METHOD AND NUMBER OF PIXELS |
| FRATE (8bits) | FRAME FREQUENCY OF VIDEO SIGNAL |
| SAMPLE (4bits) | CHROMA SAMPLING STRUCTURE OF VIDEO SIGNAL |
| Video timestamp (32 bits) | IS TIME STAMP FOR SYNCHRONIZING VIDEO SIGNAL BETWEEN TRANSMISSION AND RECEPTION, AND IS VALUE WITH ACCURACY SPECIFIED BY "CF" |

# FIG. 17

| Syntax | No. of Bits | Format |
|---|---|---|
| shutter_blending( ) { | | |
|     reserved | 32 | bslbf |
|     metadata type | 8 | uimsbf |
|     shutter_blending_length | 8 | uimsbf |
|     video_stream_id | 8 | uimsbf |
|     reference_shutter_speed_code | 4 | uimsbf |
|     number_of_blend_stages | 4 | uimsbf |
|     for ( j = 0; j < number_of_blending_stages ; j++ ) { | | |
|       reference_framerate_code | 4 | uimsbf |
|       current_framerate_code | 4 | uimsbf |
|       blending_flag | 1 | bslbf |
|       reserved | 7 | bslbf |
|       if ( blending_flag ) { | | |
|         reserved | 2 | bslbf |
|         blend_targets_code | 2 | uimsbf |
|         blend_coefficients_code | 4 | uimsbf |
|       } | | |
|     } | | |
| } | | |

EP 3 905 702 A1

## FIG. 18

| | |
|---|---|
| reserved (32bits) | AREA RESERVED AS CONVENTIONAL DEFINITION. |
| metadata type (8bits) | IN CASE OF "0x0A", EXTENSION AREA IS DEFINED AS PRESENT SYNTAX/SEMANTICS. |
| shutter_blending_length(8bis) | REPRESENTS BYTE SIZE FROM NEXT ELEMENT. |
| video_stream_id (8bits) | VIDEO STREAM ID OF TARGET. IS USED ONLY WHEN USED OUTSIDE VIDEO PACKET. |
| reference_shutter_speed_code (4bits) | CODE VALUE OF REFERENCE SHUTTER SPEED (CAMERA SHUTTER SPEED MAINLY AT TIME OF CAPTURE)<br>0x1: 1/24sec   0x2: 1/25sec   0x3: 1/30sec  0x4 1/50sec   0x5: 1/60sec<br>0x6: 1/100sec  0x7: 1/120sec   0x8: 1/180sec  0x9: 1/200sec  0xA: 1/240sec |
| number_of_blend_stages (4bits) | INDICATES NUMBER OF STAGES OF MIXING PROCESS. VALUE IS 1 OR MORE. |
| reference_framerate_code (4bits) | CODE VALUE OF REFERENCE FRAME RATE (=FRAME RATE OF MIXING PROCESS TARGET PICTURE)<br>0x1: 24fps   0x2: 25fps   0x3: 30fps   0x4 50fps   0x5: 60fps<br>0x6: 100fps  0x7: 120fps   0x8: 200fps   0x9: 240fps |
| current_framerate_code (4bits) | CODE VALUE OF CURRENT FRAME RATE (=FRAME RATE OF PICTURE ALREADY SUBJECTED TO MIXING PROCESS)<br>0x1: 24fps   0x2: 25fps   0x3: 30fps   0x4 50fps   0x5: 60fps<br>0x6: 100fps  0x7: 120fps   0x8: 200fps   0x9: 240fps |
| blending_flag (1bit) | BLEND FLAG   "1": SUBJECTED TO MIXING PROCESS   "0": NOT SUBJECTED TO MIXING PROCESS |
| blend_targets_code (2bits) | IS ONE INDICATING MIXING PROCESS TARGET, INDICATING THAT PICTURE TO BE MIXED WITH CURRENT PICTURE AT REFERENCE FRAME RATE IS ANY OF BEFORE, AFTER, AND BOTH BEFORE AND AFTER CURRENT PICTURE.<br>"10" : BEFORE,   "01" AFTER,   11  BOTH BEFORE AND AFTER |
| blend_coefficients_code (4bits) | CODE VALUE INDICATING BLEND RATIO (RATIO OF FILTER CALCULATION COEFFICIENTS AT TIME OF MIXING) VALUE HAVING LARGER RATIO IS USED AS WEIGHTING COEFFICIENT FOR CURRENT PICTURE, AND VALUE HAVING SMALLER RATIO IS USED AS WEIGHTING COEFFICIENT FOR PRECEDING AND SUBSEQUENT MIXING TARGET PICTURES.<br>0x1:  1 TO 1、   0x2:  2 TO 1、 0x3:  4 TO 1、 0x4:  1 TO 2 TO 1 |

# FIG. 19

Q1,Q2,Q4

| METADATA A | |
|---|---|
| REFERENCE SHUTTER SPEED (1/sec) | 1/240 |
| REFERENCE FRAME RATE (fps) | 240 |
| CURRENT FRAME RATE (fps) | 240 |
| BLEND FLAG | 0 |
| | |
| | |

(a)

360degree (100%)

Q3

| METADATA A | |
|---|---|
| REFERENCE SHUTTER SPEED (1/sec) | 1/240 |
| REFERENCE FRAME RATE (fps) | 240 |
| CURRENT FRAME RATE (fps) | 240 |
| BLEND FLAG | 1 |
| MIXING PROCESS TARGET | BOTH BEFORE AND AFTER |
| BLEND RATIO | 1 TO 2 TO 1 |

(b)

1080degree (300%)

# FIG. 20

S1

| METADATA A | |
|---|---|
| REFERENCE SHUTTER SPEED (1/sec) | 1/240 |
| REFERENCE FRAME RATE (fps) | 240 |
| CURRENT FRAME RATE (fps) | 120 |
| BLEND FLAG | 0 |
| | |
| | |
| | |

180degree ( 50%)

S3

| METADATA A | |
|---|---|
| REFERENCE SHUTTER SPEED (1/sec) | 1/240 |
| REFERENCE FRAME RATE (fps) | 240 |
| CURRENT FRAME RATE (fps) | 120 |
| BLEND FLAG | 1 |
| MIXING PROCESS TARGET | BOTH BEFORE AND AFTER |
| BLEND RATIO | 1 TO 2 TO 1 |
| | |

540degree (=150%)

## FIG. 21

(a)

**S1**

| METADATA A | |
|---|---|
| REFERENCE SHUTTER SPEED (1/sec) | 1/240 |
| REFERENCE FRAME RATE (fps) | 240 |
| CURRENT FRAME RATE (fps) | 120 |
| BLEND FLAG | 0 |
| | |
| | |

180degree (50%)

(b)

**S 3**

| METADATA A | |
|---|---|
| REFERENCE SHUTTER SPEED (1/sec) | 1/240 |
| REFERENCE FRAME RATE (fps) | 240 |
| CURRENT FRAME RATE (fps) | 120 |
| BLEND FLAG | 1 |
| MIXING PROCESS TARGET | BOTH BEFORE AND AFTER |
| BLEND RATIO | 1 TO 2 TO 1 |

540degree (150%)

(c)

**U1**

| METADATA B | |
|---|---|
| REFERENCE SHUTTER SPEED (1/sec) | 1/240 |
| REFERENCE FRAME RATE (fps) | 240 |
| CURRENT FRAME RATE (fps) | 120 |
| BLEND FLAG | 0 |
| REFERENCE FRAME RATE (fps) | 120 |
| CURRENT FRAME RATE (fps) | 120 |
| BLEND FLAG | 0 |

180degree (50%)

(d)

**U3**

| METADATA B | |
|---|---|
| REFERENCE SHUTTER SPEED (1/sec) | 1/240 |
| REFERENCE FRAME RATE (fps) | 240 |
| CURRENT FRAME RATE (fps) | 120 |
| BLEND FLAG | 1 |
| MIXING PROCESS TARGET | BOTH BEFORE AND AFTER |
| BLEND RATIO | 1 TO 2 TO 1 |
| REFERENCE FRAME RATE (fps) | 120 |
| CURRENT FRAME RATE (fps) | 120 |
| BLEND FLAG | 1 |
| MIXING PROCESS TARGET | BEFORE |
| BLEND RATIO | 4 TO 1 |

720degree (200%)

# FIG. 22

time →

Blending_flag=0

| Picture N |
|---|

Blending_flag=1

| Picture N+1 |
|---|

MEDIA PACKET ┌ Sequence NUMBER=S1

| IP header | UDP header | RTP header | Payload header | Payload |
|---|---|---|---|---|

├ FRcount =0x01
└ Video_timestamp = T(N)

| BLEND FLAG | 0 |
|---|---|

MEDIA PACKET ┌ Sequence NUMBER=S1+1

| IP header | UDP header | RTP header | Payload header | Payload |
|---|---|---|---|---|

├ FRcount =0x01
└ Video_timestamp = T(N)

| BLEND FLAG | 0 |
|---|---|

MEDIA PACKET ┌ Sequence NUMBER=S1+2

| IP header | UDP header | RTP header | Payload header | Payload |
|---|---|---|---|---|

├ FRcount =0x02
└ Video_timestamp = T(N+G)

| BLEND FLAG | 1 |
|---|---|
| MIXING PROCESS TARGET | |
| BLEND RATIO | |

MEDIA PACKET ┌ Sequence NUMBER=S1+3

| IP header | UDP header | RTP header | Payload header | Payload |
|---|---|---|---|---|

├ FRcount =0x02
└ Video_timestamp = T(N+G)

| BLEND FLAG | 1 |
|---|---|
| MIXING PROCESS TARGET | |
| BLEND RATIO | |

## FIG. 23

Blending_flag=0

Picture N

**MEDIA PACKET**

Sequence NUMBER=S1

| RTP header | Payload header | Payload |

- FRcount =0x01
- Video_timestamp = T(N)
- video_stream_id

Sequence NUMBER=S1+1

| RTP header | Payload header | Payload |

- FRcount =0x01
- Video_timestamp = T(N)
- video_stream_id

**METADATA PACKET**

video_stream_id

| RTP header | Payload header | Payload |

| BLEND FLAG | 0 |

- Video_timestamp = T(N)

time

Blending_flag=1

Picture N+1

**MEDIA PACKET**

Sequence NUMBER=S1+2

| RTP header | Payload header | Payload |

- FRcount =0x02
- Video_timestamp = T(N+G)
- video_stream_id

Sequence NUMBER=S1+4

| RTP header | Payload header | Payload |

- FRcount =0x02
- Video_timestamp = T(N+G)
- video_stream_id

**METADATA PACKET**

video_stream_id

| RTP header | Payload header | Payload |

| BLEND FLAG | 1 |
|------------|---|
| BLEND TARGET | |
| BLEND RATIO | |

- Video_timestamp = T(N+G)

EP 3 905 702 A1

# FIG. 24

| Ext | \| F\| | VSID | \| FRcount | \| R\|S\| | FEC | \| CF \| | RESERVE |
| --- | --- | --- | --- | --- | --- | --- | --- |

| MAP | \| FRAME | \| FRATE | \| SAMPLE | \| video_stream_id |
| --- | --- | --- | --- | --- |

| Video timestamp (only if CF > 0 ) |
| --- |

# FIG. 25

| Syntax | No. of Bits | Format |
| --- | --- | --- |
| Metadata RTP packet payload(){ | | |
|     metadata start word | 32 | bslbf |
|     Video_timestamp | 32 | uimsbf |
|     shutter_blending() | | |
| } | | |

## INTERNATIONAL SEARCH REPORT

| | International application No. |
|---|---|
| | PCT/JP2019/049713 |

**A. CLASSIFICATION OF SUBJECT MATTER**
H04N 21/236(2011.01)i; H04N 21/4385(2011.01)i
FI : H04N21/236; H04N21/4385

According to International Patent Classification (IPC) or to both national classification and IPC

**B. FIELDS SEARCHED**

Minimum documentation searched (classification system followed by classification symbols)
H04N21/236; H04N21/4385

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-186357 A (SONY CORP.) 22.11.2018 (2018-11-22) paragraphs [0082]-[0088], [0107]-[0118], [0182], fig. 13-14 | 1-11, 14-19 |
| A | paragraphs [0082]-[0088], [0107]-[0118], [0182], fig. 13-14 | 12-13 |
| A | M. Westerlund, "How to Write an RTP Payload Format", draft-ietf-payloadrtp-howto-12, 09 January 2014, https://tools.ietf.org/id/draft-ietf-payload-rtphowto-12.html "3.3.2. RTP Header" | 2 |
| A | WO 2012/153450 A1 (PANASONIC CORP.) 15.11.2012 (2012-11-15) paragraph [0044], fig. 16 | 3 |
| A | WO 2016/185947 A1 (SONY CORP.) 24.11.2016 (2016-11-24) paragraphs [0115]-[0116], fig. 17-18 | 5 |

| ☐ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 March 2020 (04.03.2020) | 17 March 2020 (17.03.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2019/049713

| Patent Documents referred in the Report | Publication Date | Patent Family | Publication Date |
|---|---|---|---|
| JP 2018-186357 A | 22 Nov. 2018 | WO 2018/198914 A1 paragraphs [0083]-[0089], [0108]-[0119], [0183], fig. 13-14 CA 3056751 A1 | |
| WO 2012/153450 A1 | 15 Nov. 2012 | US 2013/0100248 A1 paragraph [0044], fig. 16 CN 102972024 A | |
| WO 2016/185947 A1 | 24 Nov. 2016 | US 2018/0146235 A1 paragraphs [0159]-[0160], fig. 17-18 EP 3300381 A1 CN 107534790 A | |

Form PCT/ISA/210 (patent family annex) (January 2015)

**REFERENCES CITED IN THE DESCRIPTION**

**Patent documents cited in the description**

- WO 2015076277 A